(19) Europäisches Patentamt
European Patent Office
Office européen des brevets

(11) EP 4 160 745 A1

(12) **EUROPEAN PATENT APPLICATION**
published in accordance with Art. 153(4) EPC

(43) Date of publication:
**05.04.2023 Bulletin 2023/14**

(21) Application number: **21812641.5**

(22) Date of filing: **21.05.2021**

(51) International Patent Classification (IPC):
***H01M 4/62*** (2006.01) ***H01B 1/06*** (2006.01)
***H01M 4/485*** (2010.01) ***H01M 10/0525*** (2010.01)
***H01M 10/0562*** (2010.01) ***H01M 10/0585*** (2010.01)

(52) Cooperative Patent Classification (CPC):
**H01B 1/06; H01M 4/485; H01M 4/62; H01M 10/0525; H01M 10/0562; H01M 10/0585;** Y02E 60/10; Y02P 70/50

(86) International application number:
**PCT/JP2021/019326**

(87) International publication number:
**WO 2021/241429 (02.12.2021 Gazette 2021/48)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **25.05.2020 JP 2020090446**

(71) Applicant: **Murata Manufacturing Co., Ltd.**
**Nagaokakyo-shi, Kyoto 617-8555 (JP)**

(72) Inventors:
- **TAKANO, Ryohei**
  **Nagaokakyo-shi, Kyoto 617-8555 (JP)**
- **CHIKAGAWA, Osamu**
  **Nagaokakyo-shi, Kyoto 617-8555 (JP)**

(74) Representative: **Reeve, Nicholas Edward**
**Reddie & Grose LLP**
**The White Chapel Building**
**10 Whitechapel High Street**
**London E1 8QS (GB)**

# (54) SOLID-STATE BATTERY

(57) The present invention provides a solid-state battery in which the utilization factor of a negative electrode active material during charging and discharging is sufficiently high with a smaller content of a conductive agent. The present invention relates to a solid-state battery including a positive electrode layer, a negative electrode layer, and a solid electrolyte layer interposed between the positive electrode layer and the negative electrode layer, wherein at least one electrode layer of the positive electrode layer and the negative electrode layer contains a conductive agent 201 composed of a metal material, and in the electrode layer, the conductive agent 201 is coated with a coating material 202 having a melting point higher than that of the conductive agent.

FIG. 2B

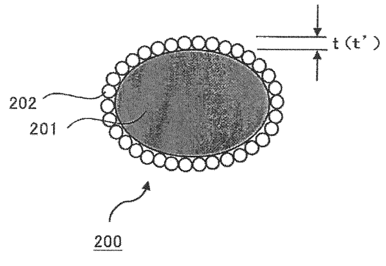


EP 4 160 745 A1

## Description

### TECHNICAL FIELD

The present invention relates to a solid-state battery.

### BACKGROUND ART

The demand for batteries as power sources for portable electronic devices such as mobile phones and portable personal computers has been greatly expanded in recent years. In batteries used for such applications, an electrolyte (electrolytic solution) such as an organic solvent has been conventionally used as a medium for moving ions.

However, the battery having the above configuration has a risk of leaking of the electrolytic solution, and there is also a problem that an organic solvent or the like used for the electrolytic solution is a combustible substance. Thus, it has been proposed to use a solid electrolyte instead of the electrolytic solution. In addition, development of a sintered solid-state secondary battery in which a solid electrolyte is used as an electrolyte and other constituent elements are also composed of solids has been advanced.

A technique of adding a carbon material as a conductive agent to electrode layers such as a negative electrode layer and a positive electrode layer for a solid-state battery is known from the viewpoint of improving electron conductivity (Patent Document 1). However, in such a technique, since the carbon material has very low sinterability and inhibits sintering of the electrode layers in co-sintering, there has been a problem that the utilization factor of the negative electrode active material decreases during charging and discharging.

Thus, attempts have been made to promote sintering of the negative electrode layer and improve the utilization factor of the negative electrode active material by using a metal material as a conductive agent (Patent Documents 2 and 3) .

### PRIOR ART DOCUMENT

### PATENT DOCUMENTS

Patent Document 1: Japanese Patent No. 5644951
Patent Document 2: WO 2019/044901
Patent Document 3: WO 2019/044902

### SUMMARY OF THE INVENTION

### Problem to be solved by the invention

The inventors of the present invention have found that the following problems occur in the conventional technique as described above.

In an ideal solid-state battery in the conventional technique, because of the low electron conductivity of the electrode active material, it is necessary to appropriately form a conductive path p' in electrode layers such as a positive electrode layer 1' and a negative electrode layer 2' with a conductive agent 200' as illustrated in FIG. 5A. However, when the conductive agent 200' such as Ag and Cu is used, the metal conductive agents 200' tend to unite and form into balls during sintering as illustrated in FIG. 5B, and therefore, it is difficult to form a continuous conductive path, and the electrode layer cannot have sufficient electronic conductivity. Thus, it is necessary to add a large amount of metal conductive agent to form a sufficient conductive path in the electrode layer. However, addition of a large amount of metal conductive agent is not preferable in terms of improving the energy density of the solid-state battery. Thus, a method for forming an appropriate and sufficient conductive path in the electrode layer with a smaller content of the metal conductive agent has been required. FIG. 5A is a schematic sectional view of an electrode layer for explaining a conductive path of an electrode layer in an ideal solid-state battery in the conventional technique. FIG. 5B is a schematic sectional view of an electrode layer for explaining a conductive path of an electrode layer in an actual solid-state battery in the conventional technique.

Under such circumstances, the inventors of the present invention have also found that the problem regarding the utilization factor of the negative electrode active material by using the conductive agent composed of a metal material as described above is remarkable when the negative electrode layer contains a negative electrode active material having a Li/V ratio of 2 or more. It has been found that when the negative electrode active material is used, unification and ball formation of the conductive agent particularly easily proceed during sintering, and breakage of the conductive path p' particularly easily occurs. This is considered to be because of relatively low wettability between the negative electrode active material having a Li/V ratio of 2 or more and the conductive agent (in particular, metal powder).

An object of the present invention is to provide a solid-state battery in which the utilization factor of a negative electrode active material during charging and discharging is sufficiently high with a smaller content of a conductive agent.

It is also an object of the present invention to provide a solid-state battery in which the utilization factor of a negative electrode active material during charging and discharging is sufficiently high when a negative electrode layer contains a negative electrode active material having a Li/V ratio of 2 or more with a smaller content of a conductive agent.

Means for solving the problem

The present invention relates to a solid-state battery including a positive electrode layer, a negative electrode layer, and a solid electrolyte layer interposed between the positive electrode layer and the negative electrode layer, wherein at least one electrode layer of the positive electrode layer and the negative electrode layer contains a conductive agent composed of a metal material, and in the electrode layer, the conductive agent is coated with a coating material having a melting point higher than that of the conductive agent.

As a result of examining a method for forming an appropriate conductive path in an electrode layer with a smaller content of the conductive agent, the inventors of the present invention have found the following points:

In an electrode layer, it has been found that unification and ball formation during sintering are suppressed by coating the metal conductive agent with a high-melting-point material, an appropriate conductive path can be formed in the electrode layer with a smaller content of the metal conductive agent, and as a result, the utilization factor of the electrode active material is improved. Thus, by using such an electrode layer, it is possible to increase the energy density of a solid-state battery.

It has also been found that, a conductive path can be efficiently formed in a negative electrode layer by coating the metal conductive agent with a high-melting-point material, the negative electrode layer containing a negative electrode active material having a Li/V ratio of 2 or more. Thus, it is possible to increase the utilization factor of the negative electrode active material and realize a high density of a solid-state battery by coating the metal conductive agent with a high-melting-point material in the negative electrode layer, the negative electrode layer containing a negative electrode active material having a Li/V ratio of 2 or more with a reduced content of the conductive agent.

Advantageous effect of the invention

The solid-state battery of the present invention achieves sufficiently high utilization factor of the electrode active material during charging and discharging with a smaller content of the conductive agent.

BRIEF EXPLANATION OF DRAWINGS

FIG. 1A is a schematic sectional view of a solid-state battery according to an embodiment of the present invention.

FIG. 1B is a schematic sectional view of a solid-state battery according to another embodiment of the present invention.

FIG. 2A is a schematic sectional view of an electrode layer for explaining a conductive path of the electrode layer in a solid-state battery of the present invention.

FIG. 2B is a schematic sectional view of a conductive agent, schematically illustrating an example of a conductive agent and a coating material (particle shape) contained in the electrode layer in the solid-state battery of the present invention.

FIG. 2C is a schematic sectional view of a conductive agent, schematically illustrating an example of a conductive agent and a coating material (film shape) contained in the electrode layer in the solid-state battery of the present invention.

FIG. 2D is a schematic sectional view of a conductive agent, schematically illustrating another example of the conductive agent and the coating material (particle shape) contained in the electrode layer in the solid-state battery of the present invention.

FIG. 2E is a schematic sectional view of a conductive agent, schematically illustrating another example of the conductive agent and the coating material (film shape) contained in the electrode layer in the solid-state battery of the present invention.

FIG. 3A is a schematic sectional view of an electrode layer for explaining a conductive path in another example of the electrode layer in the solid-state battery of the present invention.

FIG. 3B is a schematic sectional view of a conductive agent, schematically illustrating an example of an elongated conductive agent contained in the electrode layer in the solid-state battery of the present invention illustrated in FIG. 3A.

FIG. 3C is a schematic sectional view of a conductive agent, schematically illustrating another example of the elongated conductive agent contained in the electrode layer in the solid-state battery of the present invention illustrated in FIG. 3A.

FIG. 4A is a schematic sectional view of a solid-state battery, schematically illustrating a solid-state battery (main face current collecting structure) according to an embodiment of the present invention produced an Example.

FIG. 4B is a schematic sectional view of a solid-state battery, schematically illustrating a solid-state battery (end face current collecting structure) according to another embodiment of the present invention produced in an Example.

FIG. 5A is a schematic sectional view of an electrode layer for explaining a conductive path of an electrode layer in an ideal solid-state battery in the conventional technique.

FIG. 5B is a schematic sectional view of an electrode layer for explaining a conductive path of an electrode layer in an actual solid-state battery in the conventional technique.

## MODE FOR CARRYING OUT THE INVENTION

### <Solid-state battery>

The present invention provides a solid-state battery. The "solid-state battery" in the present specification refers to a battery whose constituent elements (especially electrolyte layers) are formed of solids in a broad sense and refers to an "all-solid-state battery" whose constituent elements (especially all constituent elements) are formed of solids in a narrow sense. The "solid-state battery" in the present specification encompasses a so-called "secondary battery" that can be repeatedly charged and discharged and a "primary battery" that can only be discharged. The "solid-state battery" is preferably a "secondary battery". The "secondary battery" is not excessively limited by its name, and may encompass, for example, an electrochemical device such as a "power storage device".

As illustrated in FIGS. 1A and 1B, the solid-state battery of the present invention includes a positive electrode layer 1, a negative electrode layer 2, and a solid electrolyte layer 3. The solid-state battery usually has a stacked structure in which the positive electrode layer and the negative electrode layer are stacked with the solid electrolyte layer interposed therebetween. Each of the positive electrode layer and the negative electrode layer may be stacked in two or more layers as long as a solid electrolyte layer is provided therebetween. The solid electrolyte layer is in contact with and sandwiched between the positive electrode layer and the negative electrode layer. The positive electrode layer and the solid electrolyte layer may be integrally sintered with each other as sintered bodies, and/or the negative electrode layer and the solid electrolyte layer may be integrally sintered with each other as sintered bodies. Being integrally sintered with each other as sintered bodies means that two or more members (in particular, layers) adjacent to or in contact with each other are joined by sintering. Here, the two or more members (in particular, layers) may be integrally sintered while they are sintered bodies. FIGS. 1A and 1B are schematic sectional views of a solid-state battery according to an embodiment of the present invention.

As illustrated in FIGS. 1A and 1B, the solid-state battery of the present invention may further include a positive electrode current collecting layer 11, a negative electrode current collecting layer 21, a positive electrode current collector (not illustrated), a negative electrode current collector 22, electrode separators 15, 25, a protective layer 5, and end face electrodes 10, 20. The solid-state battery of FIG. 1B is the same as the solid-state battery of FIG. 1A except that the negative electrode layer 2 has an end face current collecting structure. The end face current collecting structure of the negative electrode layer 2 in FIG. 1B is a structure in which the negative electrode layer 2 is in contact with the negative electrode current collector 22 at an end face of the negative electrode layer 2 and is electrically connected to a negative electrode terminal 20 through the negative electrode current collector 22, as will be described in detail later. On the other hand, in the solid-state battery of FIG. 1A, the negative electrode layer 2 has a main face current collecting structure. The main face current collecting structure of the negative electrode layer 2 in FIG. 1A is a structure in which the negative electrode layer 2 is in contact with the negative electrode current collecting layer 21 at a main face of the negative electrode layer 2 and is electrically connected to the negative electrode terminal 20 mainly through the negative electrode current collecting layer 21, as will be described in detail later. In FIGS. 1A and 1B, the positive electrode layer 1 has a main face electrode structure, but is not limited thereto, and may have an end face current collecting structure as the negative electrode layer 2 of FIG. 1B has.

### [Electrode layer]

The electrode layer includes the positive electrode layer 1 and the negative electrode layer 2. In the present invention, at least one electrode layer of the positive electrode layer 1 and the negative electrode layer 2 contains a coated-type conductive agent described later. For example, either the positive electrode layer 1 or the negative electrode layer 2 may contain the coated-type conductive agent, or both of them may contain the coated-type conductive agent. In a preferred embodiment, it is preferable that at least the negative electrode layer, more preferably both the negative electrode layer and the positive electrode layer contain the coated-type conductive agent. In the conventional technique, the problem that the utilization factor of the negative electrode active material decreases because of unification and ball formation caused by using the conductive agent composed of a metal material is remarkable when the negative electrode layer contains a negative electrode active material having a Li/V ratio of 2 or more. The above-described embodiment is preferable because the utilization factor of the negative electrode active material can be sufficiently improved in such a case. The "conductive agent" is a material that may also be referred to as a "conductive material". Thus, the "coated-type conductive agent" may be referred to as a "coated-type conductive material".

In the coated-type conductive agent, a conductive agent (also referred to as a core material) composed of a metal material is coated with a coating material, and the melting point of the coating material is higher than the melting point of the conductive agent (that is, the core material). Thus, when the negative electrode layer 2 (or the positive electrode layer 1) contains the coated-type conductive agent 200 as illustrated in FIG. 2A, it is possible to inhibit unification and ball formation of the conductive agent (that is, the core material) due to sintering as compared with the case where the negative electrode layer 2 (or the positive electrode layer 1) contains the conductive agent (that is, the core material) that is not coated with the coating material. Specifically, coating the conductive agent (that is, a metal having high sinterability) as a core material with a high-melting-point material (that is, a hardly sinterable material) physically inhibits contact between the core materials and interferes with unification and ball formation due to sintering of the core material. As a result, the conductive path p is sufficiently secured, and the utilization factor of the electrode active material during charging and discharging may be more sufficiently increased with a smaller content of the conductive agent.

When the melting point of the coating material is "Mpcv (°C)", and the melting point of the conductive agent (core material) is "Mpcr (°C)", "Mpcv-Mpcr" is usually 50°C or more and 4000°C or less, and is preferably 100°C or more and 4000°C or less, more preferably 200°C or more and 3000°C or less, still more preferably 200°C or more and 2000°C or less, particularly preferably 200°C or more and 1000°C or less, and most preferably 200°C or more and 800°C or less, from the viewpoint of further inhibiting unification and ball formation of the conductive agent (that is, the core material).

In the present specification, as the melting point, a value based on ChemIDplus or CRC Handbook of Chemistry and Physics is used. Specifically, the melting point is a value based on ChemIDplus, the melting point not described in ChemIDplus is a value based on CRC Handbook of Chemistry and Physics, and the melting point not described in the above two documents is a value based on Acer-NIST Phase Equilibria Diagrams.

The coating material is different in quality of material from the electrode active material and the solid electrolyte contained in the electrode layer containing the coated-type conductive agent. The electrode active material is a positive electrode active material in the positive electrode layer, and is a negative electrode active material in the negative electrode layer. Being different in quality of material means having different chemical composition formulas or different chemical structural formulas. Unification and ball formation of the core material are caused by low wettability between the electrode active material particles and the core material (conductive agent). The wettability between the electrode active material particles and the core material may be increased by coating the core material with an oxide different from the electrode active material particles, and as a result, it is possible to further inhibit unification and ball formation of the core material.

The coating material may be, for example, a metal oxide, a metal nitride, or a metal carbide, or may be a metal material. The metal material means a metal that is not oxidized. Specific examples of the coating material include metal oxides such as $Li_2ZrO_3$, $Li_2SiO_3$, $Li_2TiO_3$, $LiAlO_2$, CuO, $Al_2O_3$, and $ZrO_2$; metal nitrides such as ZrN and $Si_3N_4$; metal carbide such as WC and TaC; and metal materials such as Pd, W, and Cu. The coating material is preferably a metal oxide, and more preferably $Li_2ZrO_3$ or CuO from the viewpoint of increasing the wettability between the electrode active material particles and the core material (conductive agent) and further inhibiting unification and ball formation of the core material.

The coating material preferably contains an element that does not form a solid solution in the electrode active material from the viewpoint of further inhibiting unification and ball formation of the core material and from the viewpoint of improving the utilization factor of the electrode. Specifically, the coating material preferably contains, as the metal element, only an element that does not form a solid solution in the electrode active material, or contains only an element that does not form a solid solution in the electrode active material and Li, when expressed by a chemical composition formula. The element that does not form a solid solution in the electrode active material means an element that is not substituted with an element constituting the electrode active material (in particular, an element contributing to redox) or an element that is hardly substituted (preferably, an element that is not substituted). This is because, when the coating material contains an element that forms a solid solution in the negative electrode active material, a side reaction tends to proceed between the negative electrode active material and the coating material, which causes weakening of the coating effect at the time of sintering and causes modification of the negative electrode active material. Elements that are not substituted or elements that are hardly substituted are based on the selectivity of the atomic radius, the valence when ionized, and the coordination number. Specifically, the element that does not form a solid solution in the electrode active material may be an element having an atomic radius larger than that of an element constituting the electrode active material (in particular, an element contributing to redox).

For example, an element that does not form a solid solution in the negative electrode active material in the negative electrode layer means an element that is not substituted with vanadium (V) or an element that is hardly substituted with V when the negative electrode active material contains V. Examples of the element that is not substituted with V or the element hardly substituted with V include one or more elements selected from the group consisting of the elements other than zinc (Zn), aluminum (Al), gallium (Ga), silicon (Si), germanium (Ge), tin (Sn), phosphorus (P), arsenic (As), titanium (Ti), molybdenum (Mo), tungsten (W), iron (Fe), chromium (Cr), and cobalt (Co) in the periodic table (that is, the long periodic table), and specific examples thereof include one or more elements selected from the group consisting of Zr, Cu, Pd, Sc, Y, Nb, Ta, and B, and preferably one or more elements selected from the group consisting of Zr, Cu, and Pd.

In the coated-type conductive agent 200, the coating layer formed by a coating material 202 around the conductive agent (core material) 201 may have a particle form as illustrated in FIG. 2B, a film form as illustrated in FIG. 2C, or a composite form thereof. Specifically, the coating layer may have a particle form, a film form, or a composite form thereof in section view. The "section view" used herein is based on a form when viewed from a direction substantially perpendicular to a thickness direction based on a stacking direction of each layer constituting the solid-state battery (to be short, a form when the solid-state battery is cut along a plane parallel to the thickness direction), and includes a sectional view. In particular, the "section view" may be based on a form when the solid-state battery is cut along a plane parallel to the thickness direction based on the stacking direction of each layer constituting the solid-state battery, the plane being perpendicular to the positive electrode terminal and the negative electrode terminal, and examples thereof include section views as illustrated in FIGS. 1A and 1B. Thus, the "SEM image showing the stacked structure (sectional structure) of the solid-state battery" used for various measurements may be an image based on the section view as described above.

The coating layer having a particle form means that the coating layer is composed of a coating material having a particle shape as illustrated in FIG. 2B. The coating layer having a particle form in the solid-state battery may be obtained by producing the solid-state battery using a coated-type conductive agent raw material in which the coating material 202 having a particle shape is electrostatically adhered to the surface of the conductive agent (core material) 201 having a particle shape by mixing the conductive agent (core material) 201 having a particle shape and the coating material 202 having a particle shape.

The coating layer having a film form means that the coating layer is composed of a coating material having a film shape as illustrated in FIG. 2C. The coating layer having a film form in the solid-state battery may be obtained by producing the solid-state battery using a coated-type conductive agent raw material in which the coating material 202 is formed on the surface of the conductive agent (core material) 201 having a particle shape by a film forming method such as a sputtering method, a vapor deposition method, an ion plating method, or a sol-gel method.

The coating layer does not have to be continuously formed as illustrated in FIGS. 2B and 2C around the conductive agent regardless of whether the coating layer has a particle form or a film form. Specifically, the conductive agent (core material) 201 may have a part 210 where the coating layer 202 is not formed in a part (for example, a part where the conductive agent 201 is not coated with the coating material 202 (that is, an exposed part)) as illustrated in FIGS. 2D and 2E as long as the area ratio of the coating material described later is achieved in any of the cases described above.

For the form of the coating layer 202 in the solid-state battery, the form before sintering for producing the solid-state battery is usually maintained.

For example, when the coated-type conductive agent 200 has a coating layer in a particle form before sintering, the coating layer has a particle form after sintering. At this time, after sintering, the coating layer 202 may have the exposed part 210 of the core material 201 as illustrated in FIG. 2D but does not have to have the exposed part of the core material 201 as illustrated in FIG. 2B. In the present invention, the coating layer 202 having a particle form after sintering means that the average value of the aspects of all the coating materials in contact with the core material 201 is less than 1.5 (for example, 1 or more and less than 1.5) regardless of the presence or absence of the exposed part of the core material 201. Specifically, for each of any 100 core materials 201 in the electrode layer, when the average value of the aspects of all the coating materials in contact with the core material 201 is within the above range, the coating layer (or the coating material constituting the coating layer) has a particle form.

For example, when the coated-type conductive agent 200 has a coating layer in a film form before sintering, the coating layer has a film form after sintering. At this time, after sintering, the coating layer 202 may have the exposed part 210 of the core material 201 as illustrated in FIG. 2E but does not have to have the exposed part of the core material 201 as illustrated in FIG. 2C. In the present invention, the coating layer 202 having a film form after sintering means that the average value of the aspects of all the coating materials in contact with the core material 201 is 1.5 or more regardless of the presence or absence of the exposed part of the core material 201. Specifically, for each of any 100 core materials 201 in the electrode layer, when the average value of the aspects of all the coating materials in contact with the core material 201 is within the above range, the coating layer (or the coating material constituting the coating layer) has a film form.

Here, as illustrated for example in FIG. 2E, the aspect ratio of the coating material is a ratio of a maximum length L of the coating material to a length t in the direction perpendicular to the direction defining the maximum length in section view. The length t in the direction perpendicular to the direction defining the maximum length L may be a coating material dimension t' in the direction perpendicular to the surface (or the contact part thereof) of the conductive agent with which the coating material is in contact. In particular, when one coating material 202 is disposed along the surface of the core material 201 as illustrated in FIG. 2E, its maximum length L is the maximum value of the length along the surface of the core material 201.

The coating material 202 is disposed in contact with the conductive agent 201 around the conductive agent 201, and usually has a dimension t' (see FIGS. 2B to 2E) of 500 nm or less (for example, 1 nm or more and 500 nm or less). That is, the coating material is a coating material disposed in contact with the conductive agent (core material) around the conductive agent and is a coating material having the predetermined dimension described above. The coating material having the predetermined dimension t' means that the coating material has the predetermined dimension t' in a direction perpendicular to the surface (or a contact part thereof) of the conductive agent with which the coating material is in contact. Thus, a substance (or material) disposed in contact with the conductive agent, the substance having a dimension exceeding the predetermined dimension in the direction perpendicular to the surface of the conductive agent is not included in the coating material in the present invention. The dimension t' is a maximum length in a direction perpendicular to a surface (or a contact part thereof) of the conductive agent with which the coating material is in contact. When the coating layer has a particle form, the dimension t' is a dimension of each coating material particle constituting the coating layer. When the coating layer has a film form, the dimension t' is a thickness of the coating layer. The dimension t' is preferably 1 nm or more and 400 nm or less, more preferably 1 nm or more and 200 nm or less, still more preferably 1 nm or more and 100 nm or less, particularly preferably 1 nm or more and 50 nm or less, and most preferably 1 nm or more and 30 nm or less, from the viewpoint of further inhibiting unification and ball formation of the conductive agent (core material) and further improving the utilization factor of the electrode active material during charging and discharging of the solid-state battery.

For example, when the coating material constitutes a coating layer having a particle form, each coating material particle is disposed in contact with the conductive agent while having the predetermined dimension t' described above in a direction perpendicular to the surface of the conductive agent with which the coating material is in contact.

For example, when the coating material constitutes a coating layer having a film form, the coating material film is disposed in contact with the conductive agent while having the predetermined dimension (that is, a predetermined thickness) described above in a direction (that is, a thickness direction) perpendicular to the surface of the conductive agent with which the coating material is in contact.

It is desirable that the average thickness of the coating layer measured at any 100 points in section view be within the range of the dimension t' described above in both the case where the coating material constitutes the coating layer in a particle form and the case where the coating material constitutes the coating layer in a film form.

The area ratio of the coating material is usually 0.1% or more and 15% or less with respect to the conductive agent (core material) constituting the coated-type conductive agent, and is preferably 0.8% or more and 8% or less, and more preferably 0.8% or more and 4% or less from the viewpoint of further inhibiting unification and ball formation of the conductive agent (core material) and further improving the utilization factor of the electrode active material during charging and discharging of the solid-state battery.

The area ratio of the coating material is an area ratio of the coating material disposed in contact with the conductive agent around the conductive agent and having the predetermined dimension with respect to the conductive agent (core material).

In the present specification, the area ratio of the coating material is indicated by a value based on a ratio obtained by measuring the areas of any 100 selected conductive agents (core materials) and the area of the coating material in each of these conductive agents in section view, and dividing the total area of the coating material by the total area of the conductive agents.

The coverage of the coating material on the conductive agent (core material) may be such a coverage as to achieve the area ratio of the coating material described above.

The conductive agent (core material) of the coated-type conductive agent is composed of a metal material. The metal material is a metal that is not oxidized. The metal material constituting the core material is not particularly limited, and is composed of, for example, one or more metal materials selected from the group consisting of silver (Ag), gold (Au), palladium (Pd), platinum (Pt), copper (Cu), tin (Sn), nickel (Ni), and alloys thereof. The conductive agent is preferably composed of one or more metal materials selected from the group consisting of Ag, Cu, and alloys thereof from the viewpoint of further inhibiting the unification and the formation of balls of the conductive agent (core material) and further improving the utilization factor of the electrode active material during charging and discharging of the solid-state battery.

The shape of the conductive agent (core material) constituting the coated-type conductive agent is not particularly limited, and the conductive agent (core material) may be, for example, an elongated conductive agent, a spherical conductive agent, or a mixture thereof. The conductive agent (core material) constituting the coated-type conductive agent preferably contains an elongated conductive agent from the viewpoint of further inhibiting unification and ball formation of the conductive agent (core material) and further improving the utilization factor of the electrode active material during charging and discharging of the solid-state battery.

As illustrated in FIG. 3A, the elongated conductive agent means a conductive agent having an elongated shape in section view of the electrode layer. Thus, the elongated shape may also be referred to as an "elongated shape in section view". FIG. 3A is a schematic sectional view of an electrode layer for explaining a conductive path in an example of the electrode layer in the solid-state battery of the present invention. For example, the conductive agent having an elongated shape has a shape having an elongated direction in section view of the electrode layer.

As the conductive agent that may have an elongated shape, for example, a flat conductive agent, a fibrous conductive agent, or a mixture thereof is used. In the solid-state battery of the present invention, the conductive agent having an elongated shape in section view corresponds to which material of the flat conductive agent, the fibrous conductive agent, or a mixture thereof can be easily recognized by disassembling the solid-state battery.

The flat shape is a shape in which particles are crushed in short and is also referred to as a "scaly shape" or "flat-plate shape".

The fibrous shape is a shape including a "linear shape" or a "rod shape", and may be, for example, a shape of a so-called metal nanowire.

Specifically, the elongated conductive agent has a shape defined by a longest dimension a and a short side length (thickness dimension) b for one conductive agent 200a in section view in the electrode layer as illustrated in FIG. 3B, and a depth length c (that is, the dimension in the front and back direction in FIG. 3B) (not illustrated) is not particularly limited. The longest dimension a is a dimension defining the maximum length in section view. The short side length b is a dimension that defines the maximum length (or maximum thickness) in a direction perpendicular to the direction of the longest dimension a in section view. The short side length b usually satisfies $a > b$. The depth length c is a dimension defining the maximum length in a direction perpendicular to section view, and normally satisfies $c \geq 2$ b (in particular, $2 a \geq c \geq 2 b$) in the case of a flat shape, and satisfies $2 b > c$ (in particular, $2 b > c > 0.5 b$) in the case of a fibrous shape. Specifically, the elongated shape refers to a shape having a ratio a/b of 2.0 or more (in particular, 2.0 or more and 20.0 or less). FIG. 3B is a schematic sectional view of a conductive agent schematically illustrating an example of an elongated conductive agent that may be contained in the electrode layer in the solid-state battery of the present invention.

The elongated shape includes a bent elongated shape provided with a bent part. Specifically, as illustrated in FIG. 3C, the bent elongated shape is a shape defined by the longest dimension a and the short side length (thickness dimension) b while having one or more bent portions for one conductive agent 200b in the electrode layer in section view, and the depth length c (that is, the dimension in the front and back direction in FIG. 3C) (not illustrated) is not particularly limited. In the bent elongated shape as well, the longest dimension a is a dimension defining the maximum length in a sectional view. The short side length b is a dimension that defines the maximum length (or maximum thickness) in a direction perpendicular to the direction of the longest dimension a in section view. The depth length c is a dimension defining the maximum length in a plan view perpendicular to section view. In the bent elongated shape (for example, FIG. 3C), a, b and c and their relationship are the same as in the simple elongated shape in section view (for example, FIG. 3B). FIG. 3C is a schematic sectional view of a conductive agent schematically illustrating another example of the conductive agent having an elongated shape in section view that may be contained in the electrode layer in the solid-state battery of the present invention.

For the elongated conductive agent in the electrode layer, the average aspect ratio (the longest dimension a/short side length b described above) is usually 2.0 or more (in particular, 2.0 or more and 20.0 or less), and is preferably 2.0 or more and 15.0 or less, more preferably 2.5 or more and 10.0 or less, and still more preferably 3.0 or more and 8.0 or less from the viewpoint of further improving the utilization factor of the electrode active material.

As the average aspect ratio (a/b) of the elongated conductive agent, an average value based on any 100 conductive agents having elongated shapes in section view confirmed in the electrode layer of an SEM image (photograph) showing the stacked structure (sectional structure) of the solid-state battery is used. The section view may be an SEM image (photograph) showing a stacked structure (sectional structure) of the solid-state battery.

In the elongated conductive agent in the electrode layer, the average short side length (average short side thickness) b is not particularly limited and is preferably 0.1 um or more and 4.0 um or less, more preferably 0.1 um or more and 2.0 um or less, still more preferably 0.1 um or more and 1.5 um or less, and particularly preferably 0.1 um or more and 1.0 um or less from the viewpoint of further improving the utilization factor of the electrode active material.

As the average short side length b of the elongated conductive agent, an average value based on any 100 elongated conductive agents confirmed in the electrode layer of an SEM image (photograph) showing the stacked structure (sectional structure) of the solid-state battery is used.

The average depth length c of the elongated conductive agent in the electrode layer is not particularly limited, and may be, for example, 0.1 um or more and 10.0 um or less. For example, when a flat conductive agent is used as the conductive agent, the average depth length c of the elongated conductive agent in the electrode layer is usually 0.1 um or more and 20 um or less. For example, when a fibrous conductive agent is used, the average depth length c of the elongated conductive agent in the electrode layer is usually 0.1 um or more and 10.0 um or less.

As the average depth length c of the elongated conductive agent, an average value based on any 100 conductive agents having elongated shapes in section view confirmed in the electrode layer of a three-dimensional image created from 100 SEM images taken at intervals of 0.1 um indicating the stacked structure (sectional structure) of the solid-state battery may be used.

Specifically, the spherical conductive agent is a conductive agent having a shape in which a ratio (a/b) is less than 2.0 (in particular, 1.5 or less) in which "a" is a longest dimension defining a maximum length and "b" is a short side length defining a longest dimension in the direction perpendicular to the direction of the longest dimension a in section view, as in the case of the elongated conductive agent.

The average dimension of the conductive agent (core material) constituting the coated-type conductive agent is not particularly limited, and is usually 0.1 um or more and 10 um or less, and is preferably 0.3 um or more and 2 um or less, and more preferably 0.5 um or more and 2 um or less from the viewpoint of further inhibiting unification and ball formation of the conductive agent (core material) and further improving the utilization factor of the electrode active material during charging and discharging of the solid-state battery.

The average dimension of the conductive agent (core material) constituting the coated type conductive agent is an average value of dimensions defining the maximum length, and is an average value of dimensions corresponding to the longest dimension a of the elongated shape and the spherical conductive agent.

As the average dimension of the conductive agent (core material) constituting the coated-type conductive agent, an average value based on the conductive agent (core material) in any 100 coated-type conductive agents confirmed in the electrode layer of an SEM image (photograph) showing the stacked structure (sectional structure) of the solid-state battery is used.

The electrode layer contains a coated-type conductive agent in a content such that the proportion by area of the conductive agent (core material) constituting the coated-type conductive agent to the electrode layer is 5% or more and 35% or less, and the electrode layer contains the coated-type conductive agent in a content such that the proportion by area is preferably 10% or more and 30% or less, more preferably 18% or more and 28% or less from the viewpoint of further inhibiting unification and ball formation of the conductive agent (core material) and further improving the utilization factor of the electrode active material during charging and discharging of the solid-state battery.

The proportion by area of the conductive agent (core material) constituting the coated-type conductive agent to the electrode layer is a value of the proportion by area of the conductive agent (core material) confirmed in the electrode layer of an SEM image (photograph) showing the stacked structure (sectional structure) of the solid-state battery. More specifically, the proportion by area of the conductive agent (core material) constituting the coated-type conductive agent to the electrode layer is an average value of values measured at any 10 points in section view, and is represented as a proportion by area with respect to the electrode layer (that is, the total area of each visual field in the electrode layer).

(Negative electrode layer)

The negative electrode layer 2 contains a negative electrode active material and may further contain a solid electrolyte. When the negative electrode layer 2 contains a coated-type conductive agent, the negative electrode layer 2 contains a coated-type conductive agent and a negative electrode active material, and may further contain a solid electrolyte. In the negative electrode layer, it is preferable that each of the coated-type conductive agent, the negative electrode active material, and the solid electrolyte have a form of a sintered body. For example, when the negative electrode layer contains a coated-type conductive agent, a negative electrode active material, and a solid electrolyte, the negative electrode layer preferably has a form of a sintered body in which the coated-type conductive agent, the negative electrode active material particles, and the solid electrolyte are bonded to each other by sintering while the coated-type conductive agent and the solid electrode binding the negative electrode active material particles.

The negative electrode layer may further contain a conductive agent other than the coated-type conductive agent. Examples of the other conductive agent include a conductive agent composed of a metal material similar to the metal material as a conductive agent (core material) constituting the above-described coated-type conductive agent, and carbon materials such as carbon nanotubes, for example, acetylene black, Ketjen black, Super P (registered trademark), and VGCF (registered trademark).

The negative electrode layer is a layer capable of occluding and releasing metal ions and is preferably a layer capable of occluding and releasing lithium ions or sodium ions (in particular, lithium ions). The negative electrode active material capable of occluding and releasing lithium ions contained in the negative electrode layer is not particularly limited, and may be, for example, a carbon material such as graphite, and it is preferable that the negative electrode layer contain a negative electrode active material having a molar ratio of lithium (Li) to vanadium (V) of 2.0 or more (in particular, 2 or more and 10 or less) from the viewpoint of further improving the utilization factor of the negative electrode active material and improving the discharge capacity. The molar ratio of Li to V in the negative electrode active material is preferably 2 or more and 6 or less (in particular, 2 or more and 4 or less) from the viewpoint of further improving the utilization factor of the negative electrode active material. In the present invention, it is particularly effective that the negative electrode layer contains the negative electrode active material in such a molar ratio. When the negative electrode layer contains the negative electrode active material having such a molar ratio, because of the low wettability with the conductive agent, unification and ball formation (for example, spheroidization) of the conductive agent is particularly likely to proceed during sintering, the conductive path is particularly likely to break, and the utilization factor of the negative electrode active material further decreases. However, in the present invention, the conductive path can be sufficiently inhibited from breaking, and as a result, the utilization factor of the negative electrode active material during charging and discharging can be more sufficiently improved with a smaller amount of the conductive agent and with such a negative electrode active material contained in the negative electrode layer. Thus, the effect of having the conductive agent having a coated form in the present invention is particularly high when the negative electrode layer contains the negative electrode active material in the above molar ratio.

In the present invention, the negative electrode layer contains the negative electrode active material in which the molar ratio of Li to V is in the above range, and the solid electrolyte layer contains the solid electrolyte having a garnet-type structure or a LISICON-type structure as described later, so that more favorable bonding property is obtained between the solid electrolyte layer and the negative electrode layer. Further, a side reaction during co-sintering between the negative electrode active material contained in the negative electrode layer and the garnet-type solid electrolyte or the LISICON-type solid electrolyte in the solid electrolyte layer is inhibited, which can increase reversible capacity of the solid-state battery. As a result, the utilization factor of the negative electrode active material during charging and discharging can be more sufficiently increased.

From the viewpoint of further improving the utilization factor of the negative electrode active material, the negative electrode active material preferably has an average chemical compound represented by the general formula (1).

[Chemical Formula 1] $(Li_{[3-ax+(5-b)(1-y)]}A_x)(V_yB_{1-y})O_4$ (1)

Having such a composition enables the reactivity with the LISICON-type solid electrolyte in the solid electrolyte layer to further sufficiently decrease. In addition, the negative electrode active material used in the present invention more sufficiently exhibits capacity through redox of V. Thus, the V amount y is preferably $0.5 \leq y \leq 1.0$ as described later to obtain a sufficient reversible capacity. When the negative electrode active material has the above composition, it is sufficient that the negative electrode active material has the above average composition in the thickness direction of the negative electrode layer, and the chemical composition may be changed in the thickness direction of the negative electrode layer.

In the formula (1), A is one or more elements selected from the group consisting of sodium (Na), potassium (K), magnesium (Mg), calcium (Ca), and zinc (Zn),

B is one or more elements selected from the group consisting of zinc (Zn), aluminum (Al), gallium (Ga), silicon (Si), germanium (Ge), tin (Sn), phosphorus (P), arsenic (As), titanium (Ti), molybdenum (Mo), tungsten (W), iron (Fe), chromium (Cr), and cobalt (Co),

x has a relationship of $0 \leq x \leq 1.0$, preferably a relationship of $0 \leq x \leq 0.5$, more preferably a relationship of $0 \leq x \leq 0.1$, and still more preferably 0,

y has a relationship of $0.5 \leq y \leq 1.0$, preferably has a relationship of $0.55 \leq y \leq 1.0$, more preferably has a relationship of $0.8 \leq y \leq 1.0$, and still more preferably 1,

a is an average valence of A. The average valence of A is, for example, a value represented by $(n1 \times a + n2 \times b + n3 \times c)/(n1 + n2 + n3)$ when A is recognized as n1 of elements X having a valence a+, n2 of elements Y having a valence b+, and n3 of elements Z having a valence c+.

b is an average valence of B. The average valence of B is, for example, the same value as the average valence of A described above when B is recognized as n1 of elements X having a valence a+, n2 of elements Y having a valence b+, and n3 of elements Z having a valence c+.

In the formula (1), from the viewpoint of improving the availability of the negative electrode active material and further improving the utilization factor of the negative electrode active material, a preferred embodiment satisfies the following points:

A is one or more elements selected from the group consisting of Al and Zn;

B is one or more, particularly two, elements selected from the group consisting of Si and P;

x has a relationship of $0 \leq x \leq 0.06$, and more preferably 0;
y has a relationship of $0.55 \leq y \leq 1.0$, more preferably $0.8 \leq y \leq 1.0$, and still more preferably 1;
a is an average valence of A.
b is an average valence of B.

Specific examples of the negative electrode active material include $Li_3VO_4$, $Li_{3.2}(V_{0.8}Si_{0.2})O_4$, $(Li_{3.1}Al_{0.03})(_{0.3}Si_{0.2})O_4$, $(Li_{3.1}Zn_{0.05})(V_{3.8}Si_{0.2})O_4$, $Li_{3.3}(V_{0.6}P_{0.1}Si_{0.3})O_4$, $Li_{3.18}(V_{0.77}P_{0.05}Si_{0.18})O_4$, $Li_{3.07}(V_{0.90}P_{0.03}Si_{0.07})O_4$, and $Li_{3.22}(V_{0.72}P_{0.06}Si_{0.22})O_4$.

The chemical composition of the negative electrode active material may be an average chemical composition. The average chemical composition of the negative electrode active material means an average value of the chemical compositions of the negative electrode active material in the thickness direction of the negative electrode layer. The average chemical composition of the negative electrode active material may be analyzed and measured by breaking the solid-state battery and performing composition analysis by EDX using SEM-EDX (energy dispersive X-ray spectroscopy) in a field of view in which the whole negative electrode layer fits in the thickness direction.

In the negative electrode layer, the average chemical composition of the negative electrode active material and the average chemical composition of the solid electrolyte described later may be automatically distinguished and measured according to their compositions in the composition analysis.

The negative electrode active material may be produced, for example, by the following method. First, a raw material compound containing a predetermined metal atom is weighed to have a predetermined chemical composition, and water is added and mixed to obtain a slurry. The slurry is dried, calcined at 700°C or more and 1000°C or less for 4 hours or more and 6 hours or less, and pulverized to obtain a negative electrode active material.

As the chemical composition of the negative electrode active material, the chemical composition of the negative electrode active material used at the time of production is reflected as it is for example when high-speed sintering is performed at 750°C for about 1 minute together with the solid electrolyte layer, but when sintering is performed at 750°C for a long time of about 1 hour, element diffusion into the solid electrolyte layer proceeds, and the V amount usually decreases.

The negative electrode active material preferably has a $\beta_{II}$-$Li_3VO_4$-type structure or a $\gamma_{II}$-$Li_3VO_4$-type structure from the viewpoint of further improving the utilization factor of the negative electrode active material. Having such a crystal structure improves the reversibility of charging and discharging and enables stable cycle characteristics to be obtained. In addition, it is more preferable that the active material have a $\gamma_{II}$-$Li_3VO_4$-type structure because the bonding property with the LISICON-type solid electrolyte in the solid electrolyte layer improves.

The negative electrode active material having a $\beta_{II}$-$Li_3VO_4$-type structure means that the negative electrode active material (in particular, its particles) has a $\beta_{II}$-$Li_3VO_4$-type crystal structure, and in a broad sense, it means that the negative electrode active material has a crystal structure that may be recognized as a $\beta_{II}$-$Li_3VO_4$-type crystal structure by a person skilled in the art of solid-state batteries. In a narrow sense, the negative electrode active material having a $\beta_{II}$-$Li_3VO_4$-type structure means that the negative electrode active material (in particular, its particles) shows one or more main peaks corresponding to Miller indices unique to a so-called $\beta_{II}$-$Li_3VO_4$-type crystal structure at a predetermined incident angle in X-ray diffraction. Examples of the negative electrode active material having a $\beta_{II}$-$Li_3VO_4$-type structure include ICDD Card No. 01-073-6058.

The negative electrode active material having a $\gamma_{II}$-$Li_3VO_4$-type structure means that the negative electrode active material (in particular, its particles) has a $\gamma_{II}$-$Li_3VO_4$-type crystal structure, and in a broad sense, it means that the negative electrode active material has a crystal structure that may be recognized as a -$\gamma_{II}$-$Li_3VO_4$-type crystal structure by a person skilled in the field of solid-state batteries. In a narrow sense, the negative electrode active material having a $\gamma_{II}$-$Li_3VO_4$-type structure means that the negative electrode active material (in particular, its particles) shows one or more main peaks corresponding to Miller indices unique to a so-called $\gamma_{II}$-$Li_3VO_4$-type crystal structure at a predetermined incident angle in X-ray diffraction. Examples of the negative electrode active material having a $\gamma_{II}$-$Li_3VO_4$-type structure include ICDD Card No. 01-073-2850.

The average chemical composition and crystal structure of the negative electrode active material in the negative electrode layer are usually changed by element diffusion during sintering. The negative electrode active material preferably has the chemical composition and crystal structure described above in the solid-state battery after being sintered together with the positive electrode layer and the solid electrolyte layer.

Examples of the negative electrode active material capable of occluding and releasing sodium ions include at least one selected from the group consisting of a sodium-containing phosphoric acid compound having a NASICON-type structure, a sodium-containing phosphoric acid compound having an olivine-type structure, a sodium-containing oxide having a spinel-type structure, and the like.

The average particle size of the negative electrode active material is not particularly limited, and may be, for example, 0.01 um or more and 20 um or less, and preferably 0.1 um or more and 5 um or less.

As the average particle size of the negative electrode active material, for example, 10 or more and 100 or less particles are randomly selected from an SEM image, and their particle sizes are simply averaged to determine the average particle size (arithmetic average).

The particle size is the diameter of a spherical particle when the particle is assumed to be a perfect sphere. For such a particle size, for example, a section of the solid-state battery is cut out, a sectional SEM image is photographed using an SEM, the sectional area S of the particle is calculated using image analysis software (for example, "Azo-kun" (manufactured by Asahi Kasei Engineering Corporation)), and then the particle diameter R may be determined by the following formula.

[Mathematical Formula 1]

$$R = 2 \times (S / \pi)^{1/2}$$

The average particle size of the negative electrode active material in the negative electrode layer may be automatically measured by specifying the negative electrode active material according to the composition at the time of measuring the average chemical composition described above.

The proportion by volume of the negative electrode active material in the negative electrode layer is not particularly limited, and is preferably 20% or more and 80% or less, more preferably 30% or more and 75% or less, and still more preferably 30% or more and 60% or less from the viewpoint of further improving the utilization factor of the negative electrode active material.

The proportion by volume of the negative electrode active material in the negative electrode layer may be measured from an SEM image after FIB sectional processing. Specifically, a section of the negative electrode layer is observed using SEM-EDX. It is possible to measure the proportion by volume of the negative electrode active material by determining that a site where V is detected from EDX is the negative electrode active material and calculating the area ratio of the site.

The particle shape of the negative electrode active material in the negative electrode layer is not particularly limited, and may be, for example, any of a spherical shape, a flat shape, and an indefinite shape.

The negative electrode layer preferably further includes a solid electrolyte, in particular, a solid electrolyte having a garnet-type structure. The negative electrode layer containing a garnet-type solid electrolyte enables the ion conductivity of the negative electrode layer to increase, and a high rate can be expected. In addition, since a side reaction during co-firing with the negative electrode active material having a Li/V ratio of 2 or more can be inhibited, improvement of the utilization factor of the negative electrode can be expected. As described later, the solid electrolyte layer also preferably further includes a solid electrolyte, in particular, a solid electrolyte having a garnet-type structure. This is because the solid electrolyte layer containing a garnet-type solid electrolyte can improve the insulating properties of the solid electrolyte layer. It is considered that this is because electrons are less likely to be injected because the garnet-type solid electrolyte is less likely to be reduced during charging and discharging, and the flexibility of the LISICON-type solid electrolyte in the solid electrolyte increase to increase the electron resistance. In addition, since a side reaction during co-firing with the negative electrode active material having a Li/V ratio of 2 or more can be inhibited, improvement of the utilization factor of the negative electrode can be expected. Thus, at least one (particularly both) of the negative electrode layer and the solid electrolyte layer preferably includes the solid electrolyte having a garnet-type structure. At least one of the negative electrode layer and the solid electrolyte layer containing the solid electrolyte having a garnet-type structure means that one of the negative electrode layer and the solid electrolyte layer may contain the solid electrolyte having a garnet-type structure, or both of them may contain the solid electrolyte having a garnet-type structure.

The solid electrolyte having a garnet-type structure means that the solid electrolyte has a garnet-type crystal structure, and in a broad sense, it means that the solid electrolyte has a crystal structure that may be recognized as a garnet-type crystal structure by a person skilled in the field of solid-state batteries. In a narrow sense, the solid electrolyte having a garnet-type structure means that the solid electrolyte shows one or more main peaks corresponding to Miller indices unique to a so-called garnet-type crystal structure at a predetermined incident angle in X-ray diffraction.

In the negative electrode layer, the solid electrolyte having a garnet-type structure preferably has an average chemical compound represented by the general formula (2).

[Chemical Formula 2] $(Li_{[7-ax-(b-4)y]}A_x) La_3Zr_{2-y}B_yO_{12}$ (2)

Containing the solid electrolyte having the average chemical composition as described above in the negative electrode layer can achieve a further improvement of the utilization factor of the negative electrode active material.

In the formula (2), A is one or more elements selected from the group consisting of gallium (Ga), aluminum (Al), magnesium (Mg), zinc (Zn), and scandium (Sc),

B is one or more elements selected from the group consisting of niobium (Nb), tantalum (Ta), tungsten (W), tellurium (Te), molybdenum (Mo), and bismuth (Bi),
x has a relationship of $0 \leq x \leq 0.5$,
y has a relationship of $0 \leq y \leq 2.0$,
a is the average valence of A, and is the same as the average valence of A in the formula (1), and
b is the average valence of B, and is the same as the average valence of B in the formula (1).

In the formula (2), from the viewpoint of further improving the utilization factor of the negative electrode active material, a preferred embodiment has the following points:

A is one or more elements selected from the group consisting of Ga and Al;
B is one or more elements selected from the group consisting of Nb, Ta, W, Mo, and Bi;
x has a relationship of $0 \leq x \leq 0.3$, preferably 0;
y has a relationship of $0 \leq y \leq 1.0$, preferably a relationship of $0 \leq y \leq 0.7$, more preferably a relationship of $0.3 \leq y \leq 0.7$, and preferably 0.5;
a is an average valence of A.
b is an average valence of B.

Specific examples of the solid electrolyte represented by the general formula (2) include $(Li_{6.4}Ga_{0.05}Al_{0.15})La_3Zr_2O_{12}$, $(Li_{6.4}Ga_{0.2})La_3Zr_2O_{12}$, $Li_{6.4}La_3(Zr_{1.6}Ta_{0.4})O_{12}$, $(Li_{6.4}Al_{0.2})La_3Zr_2O_{12}$, $Li_{6.5}La_3(Zr_{1.5}Mo_{0.25})O_{12}$, and $Li_{6.5}La_3(Zr_{1.5}Ta_{0.5})O_{12}$.

The average chemical composition of the solid electrolyte (in particular, the solid electrolyte having a garnet-type structure) in the negative electrode layer means an average value of the chemical composition of the solid electrolyte in the thickness direction of the negative electrode layer. The average chemical composition of the solid electrolyte may be analyzed and measured by breaking the solid-state battery and performing composition analysis by EDX using SEMEDX (energy dispersive X-ray spectroscopy) in a field of view in which the whole negative electrode layer fits in the thickness direction.

In the negative electrode layer, the average chemical composition of the negative electrode active material and the average chemical composition of the solid electrolyte may be automatically and separately measured by the composition analysis.

The solid electrolyte of the negative electrode layer may be obtained by the same method as in the case of the negative electrode active material except that a raw material compound containing a predetermined metal atom is used, or may be obtained as a commercially available product.

The average chemical composition and crystal structure of the solid electrolyte in the negative electrode layer are usually changed by element diffusion during sintering. The solid electrolyte preferably has the average chemical composition and the crystal structure described above in the solid-state battery after being sintered together with the positive electrode layer and the solid electrolyte layer.

The proportion by volume of the solid electrolyte (in particular, the solid electrolyte having a garnet-type structure) in the negative electrode layer is not particularly limited, and is preferably 100 or more and 50% or less, and more preferably 20% or more and 40% or less, from the viewpoint of the balance between further improvement of the utilization factor of the negative electrode active material and high energy density of the solid-state battery.

The proportion by volume of the solid electrolyte in the negative electrode layer may be measured by the same method as the proportion by volume of the negative electrode active material. The garnet-type solid electrolyte is based on a site where Zr and/or La is detected by EDX.

The negative electrode layer may further contain, for example, a sintering aid and a conductive agent in addition to the negative electrode active material and the solid electrolyte.

Containing a sintering aid in the negative electrode layer enables the negative electrode layer to be densified during sintering at a lower temperature and can inhibit element diffusion at the interface between the negative electrode active material and the solid electrolyte layer. As the sintering aid, a sintering aid known in the field of solid-state batteries may be used. It is preferable that the composition of the sintering aid contain at least lithium (Li), boron (B), and oxygen (O), and the molar ratio of Li to B (Li/B) is 2.0 or more as a result of studies by the inventors from the viewpoint of further improving the utilization factor of the negative electrode active material. These sintering aids have low melting properties, with which the negative electrode layer can be densified at a lower temperature by promoting liquid phase sintering. In addition, by having the above composition, it is possible to further inhibit the side reaction between the sintering aid and the LISICON-type solid electrolyte used in the present invention at the time of co-sintering. Examples of the sintering aid satisfying these conditions include $Li_3BO_3$, $(Li_{2.7}Al_{0.3})BO_3$, and $Li_{2.8}(B_{0.8}C_{0.2})O_3$. Among them, it is particularly preferable to use $(Li_{2.7}Al_{0.3})BO_3$ having a particularly high ion conductivity.

The proportion by volume of the sintering aid in the negative electrode layer is not particularly limited, and is preferably 0.1 or more and 10% or less, and more preferably 1% or more and 7% or less from the viewpoint of the balance between further improvement of the utilization factor of the negative electrode active material and high energy density of the solid-state battery.

The proportion by volume of the sintering aid in the negative electrode layer may be measured by the same method as the proportion by volume of the negative electrode active material. As a detection element in EDX to determine a region of the sintering aid, B may be focused.

In the negative electrode layer, the porosity is not particularly limited, and is preferably 20% or less, more preferably 15% or less, and still more preferably 10% or less from the viewpoint of further improvement of the utilization factor of the negative electrode active material.

As the porosity of the negative electrode layer, a value measured from an SEM image after FIB section processing is used.

The negative electrode layer usually has a thickness of 2 um or more and 100 um or less, particularly 2 um or more and 50 um or less.

The negative electrode layer 2 may have an end face current collecting structure as illustrated in FIG. 1B or may have a main face current collecting structure as illustrated in FIG. 1A. The negative electrode layer preferably has an end face current collecting structure from the viewpoint of further improving the capacity density (for example, energy density).

The negative electrode layer 2 having an end face current collecting structure means that the negative electrode layer 2 has a structure for collecting current on an end face 2a (in particular, only the end face) of the negative electrode layer 2 on the negative electrode terminal 20 side. Specifically, as illustrated for example in FIG. 1B, the negative electrode layer 2 may be in contact with the negative electrode current collector 22 at the end face 2a (in particular, only the end face) of the negative electrode layer 2 on the negative electrode terminal 20 side and is electrically connected to the negative electrode terminal 20 through the negative electrode current collector 22, or may be directly and electrically connected to the negative electrode terminal 20 at the end face 2a (in particular, only the end face) of the negative electrode layer 2 on the negative electrode terminal 20 side. The negative electrode layer 2 is preferably in contact with the negative electrode current collector 22 at the end face 2a (in particular, only the end face) of the negative electrode layer 2 on the negative electrode terminal 20 side and is electrically connected to the negative electrode terminal 20 through the negative electrode current collector 22 as illustrated in FIG. 1B from the viewpoint of more sufficiently securing the electrical connection with the negative electrode terminal 20.

In the end face current collecting structure of the negative electrode layer 2, when the negative electrode layer 2 is electrically connected to the negative electrode terminal 20 through the negative electrode current collector 22, the end faces of the negative electrode layer 2 and the negative electrode current collector 22 are in contact with each other. As a result, the negative electrode layer 2 and the negative electrode current collector have a configuration in which they are adjacent to each other in a direction perpendicular to the stacking direction in section view. The negative electrode layer 2 and the negative electrode current collector 22 are also adjacent to each other in a direction perpendicular to the stacking direction in plan view.

In the end face current collecting structure of the negative electrode layer 2, when the negative electrode layer 2 is electrically connected to the negative electrode terminal 20 through the negative electrode current collector 22, the negative electrode current collector 22 usually has an upper face 22b flush with an upper face 2b of the negative electrode layer 2 in a stacking direction L and has a lower face 22c flush with a lower face 2c of the negative electrode layer 2 in the stacking direction L. The term "flush" means that there is no step between the two faces. The two faces are the upper face 2b of the negative electrode layer 2 and the upper face 22b of the negative electrode current collector 22, and the lower face 2c of the negative electrode layer 2 and the lower face 22c of the negative electrode current collector 22.

The negative electrode layer 2 having a main face current collecting structure means that the negative electrode layer 2 has a structure for collecting current on a main face of the negative electrode layer. Specifically, as illustrated in FIG. 1A, the negative electrode layer 2 is electrically connected to the negative electrode terminal 20 through the negative electrode current collecting layer 21 while being in contact with the negative electrode current collecting layer 21 on a main face 2x of the negative electrode layer 2. In the main face current collecting structure of the negative electrode layer 2, the negative electrode current collecting layer 21 may be stacked on a main face of the negative electrode layer 2, and/or the negative electrode layer 2 may be stacked on a main face of the negative electrode current collecting layer 21. The main face is a face having a relatively large area, specifically, an upper face and/or a lower face perpendicular to the stacking direction. Colleting current on a main face means that electrons mainly enter and exit from the main face. In FIG. 1A, the negative electrode layer 2 is directly and electrically connected to the negative electrode terminal 20 on the negative electrode terminal 20 side, but may be electrically connected to the negative electrode terminal 20 through a negative electrode current collector as in the negative electrode layer in the end face current collecting structure. When the negative electrode layer 2 has a main face current collecting structure, the negative electrode layer 2 may be stacked on both main faces of the negative electrode current collecting layer 21 as illustrated in FIG. 1A, or may be stacked on one of the main faces.

The negative electrode current collecting layer 21 and the negative electrode current collector 22 that the negative electrode layer 2 may have include at least a conductive material. The negative electrode current collecting layer 21 and the negative electrode current collector 22 may further include a solid electrolyte. In a preferred aspect, the negative electrode current collecting layer 21 and the negative electrode current collector 22 are composed of a sintered body containing at least a conductive material and a solid electrolyte. As the conductive material that may be contained in the negative electrode current collecting layer 21 and the negative electrode current collector 22, a material having a relatively high conductivity is usually used, and for example, it is preferable to use at least one selected from the group consisting of a carbon material, silver, palladium, gold, platinum, aluminum, copper, and nickel. The solid electrolyte that may be contained in the negative electrode current collecting layer 21 and the negative electrode current collector 22 may be selected from the same solid electrolyte as the solid electrolyte that may be contained in the negative electrode layer described above.

The negative electrode current collecting layer 21 and the negative electrode current collector 22 preferably have a form of a sintered body from the viewpoint of reducing the production cost of the solid-state battery and reducing the internal resistance of the solid-state battery by integrally sintering them. When the negative electrode current collecting layer 21 and the negative electrode current collector 22 have a form of a sintered body, for example, the negative electrode current collecting layer 21 and the negative electrode current collector 22 may be composed of a sintered body further containing a sintering aid in addition to the conductive material and the solid electrolyte described above. The sintering aid contained in the negative electrode current collecting layer 21 and the negative electrode current collector 22 may be selected from, for example, the same material as the sintering aid that may be contained in the negative electrode layer.

The thickness of the negative electrode current collecting layer is not particularly limited, and may be, for example, 1 um or more and 5 um or less, particularly 1 um or more and 3 um or less.

The thickness of the negative electrode current collector may be usually the same as the thickness of the negative electrode layer.

The negative electrode layer is a layer that may also be referred to as a "negative electrode active material layer".

(Positive Electrode Layer)

The positive electrode layer 1 contains a positive electrode active material and may further contain a solid electrolyte. When the positive electrode layer 1 contains a coated-type conductive agent, the positive electrode layer 1 contains a coated-type conductive agent and a positive electrode active material, and may further contain a solid electrolyte. From the viewpoint of further improving the utilization factor of the positive electrode active material, the positive electrode layer preferably contains a coated-type conductive agent. In the positive electrode layer, it is preferable that each of the coated-type conductive agent, the positive electrode active material, and the solid electrolyte have a form of a sintered body. For example, when the positive electrode layer contains a coated-type conductive agent, a positive electrode active material, and a solid electrolyte, the positive electrode layer preferably has a form of a sintered body in which the coated-type conductive agent, the positive electrode active material particles, and the solid electrolyte are bonded to each other by sintering while the coated-type conductive agent and the solid electrode binding the positive electrode active material particles.

The positive electrode layer is a layer capable of occluding and releasing metal ions and is preferably a layer capable of occluding and releasing lithium ions or sodium ions (in particular, lithium ions). The positive electrode active material is not particularly limited, and a positive electrode active material known in the field of solid-state batteries may be used. Examples of the positive electrode active material capable of occluding and releasing lithium ions include lithium-containing phosphoric acid compound particles having a NASICON-type structure, lithium-containing phosphoric acid compound particles having an olivine-type structure, lithium-containing layered oxide particles, and lithium-containing oxide particles having a spinel-type structure. Specific examples of the lithium-containing phosphoric acid compound having a NASICON-type structure that is preferably used include $Li_3V_2(PO_4)_3$. Specific examples of the lithium-containing phosphoric acid compound having an olivine-type structure that is preferably used include $Li_3Fe_2(PO_4)_3$ and $LiMnPO_4$. Specific examples of the lithium-containing layered oxide particles that is preferably used include $LiCoO_2$ and $LiCo_{1/3}Ni_{1/3}Mn_{2/3}O_2$. Specific examples of the lithium-containing oxide having a spinel-type structure that is preferably used include $LiMn_2O_4$, $LiNi_{0.5}Mn_{1.5}O_4$. From the viewpoint of reactivity during co-sintering with the LISICON-type solid electrolyte used in the present invention, a lithium-containing layered oxide such as $LiCoO_2$ or $LiCo_{1/3}Ni_{1/3}Mn_{1/3}O_2$ is more preferably used as the positive electrode active material. Only one type of these positive electrode active material particles may be used, or a plurality of types thereof may be mixed and used.

The positive electrode active material having a NASICON-type structure in the positive electrode layer means that the positive electrode active material (in particular, its particles) have a NASICON-type crystal structure, and in a broad sense, it means that the positive electrode active material has a crystal structure that may be recognized as a NASICON-type crystal structure by a person skilled in the art of solid-state state batteries. In a narrow sense, the positive electrode active material having a NASICON-type structure in the positive electrode layer means that the positive electrode active material (in particular, its particles) exhibits one or more main peaks corresponding to Miller indices unique to a so-called NASICON-type crystal structure at a predetermined incident angle in X-ray diffraction. Examples of the positive electrode active material having a NASICON-type structure that is preferably used include the compounds exemplified above.

The positive electrode active material having an olivine-type structure in the positive electrode layer means that the positive electrode active material (in particular, its particles) has an olivine-type crystal structure, and in a broad sense, it means that the positive electrode active material has a crystal structure that may be recognized as an olivine-type crystal structure by a person skilled in the art of solid-state batteries. In a narrow sense, the positive electrode active material having an olivine-type structure in the positive electrode layer means that the positive electrode active material (in particular, its particles) exhibits one or more main peaks corresponding to Miller indices unique to a so-called olivine-type crystal structure at a predetermined incident angle in X-ray diffraction. Examples of the positive electrode active material having an olivine-type structure that is preferably used include the compounds exemplified above.

Examples of the positive electrode active material capable of occluding and releasing sodium ions include at least one selected from the group consisting of a sodium-containing phosphoric acid compound having a NASICON-type structure, a sodium-containing phosphoric acid compound having an olivine-type structure, a sodium-containing layered oxide, and a sodium-containing oxide having a spinel-type structure.

The positive electrode active material having a spinel-type structure in the positive electrode layer means that the positive electrode active material (in particular, its particles) has a spinel-type crystal structure, and in a broad sense, it means that the positive electrode active material has a crystal structure that may be recognized as a spinel-type crystal structure by those skilled in the art of solid-state batteries. In a narrow sense, the positive electrode active material having a spinel-type structure in the positive electrode layer means that the positive electrode active material (in particular, its particles) exhibits one or more main peaks corresponding to Miller indices unique to a so-called spinel-type crystal structure at a predetermined incident angle in X-ray diffraction. Examples of the positive electrode active material having a spinel-type structure that is preferably used include the compounds exemplified above.

The chemical composition of the positive electrode active material may be an average chemical composition. The average chemical composition of the positive electrode active material means an average value of the chemical compositions of the positive electrode active material in the thickness direction of the positive electrode layer. The average chemical composition of the positive electrode active material may be analyzed and measured by breaking the solid-state battery and performing composition analysis by EDX using SEM-EDX (energy dispersive X-ray spectroscopy) in a field of view in which the whole positive electrode layer fits in the thickness direction.

The positive electrode active material may be obtained by the same method as in the case of the negative electrode active material except that a raw material compound containing a predetermined metal atom is used, or may be obtained as a commercially available product.

Usually, the chemical composition and crystal structure of the positive electrode active material in the positive electrode layer may be changed by element diffusion during sintering. The positive electrode active material preferably has the chemical composition and crystal structure described above in the solid-state battery after being sintered together with the negative electrode layer and the solid electrolyte layer.

The average particle size of the positive electrode active material is not particularly limited, and may be, for example, 0.01 um or more and 10 um or less, and preferably 0.05 um or more and 4 um or less.

The average particle size of the positive electrode active material may be determined by the same method as the average particle size of the negative electrode active material in the negative electrode layer.

The average particle size of the positive electrode active material in the positive electrode layer usually reflects the average particle size of the positive electrode active material used in the production as it is. In particular, when $LiCoO_2$ is used for the positive electrode particles, the average particle size of the positive electrode active material used in the production is reflected as it is.

The particle shape of the positive electrode active material in the positive electrode layer is not particularly limited, and may be, for example, any of a spherical shape, a flat shape, and an indefinite shape.

The proportion by volume of the positive electrode active material in the positive electrode layer is not particularly limited, and is preferably 30% or more and 90% or less, and more preferably 40% or more and 70% or less from the viewpoint of further improving the utilization factor of the negative electrode active material.

The positive electrode layer may further contain, for example, a solid electrolyte, a sintering aid, a conductive agent, and the like in addition to the positive electrode active material.

The type of the solid electrolyte contained in the positive electrode layer is not particularly limited. Examples of the solid electrolyte contained in the positive electrode layer include a solid electrolyte having a garnet-type structure $(Li_{6.4}Ga_{0.2})La_3Zr_2O_{12}$, $Li_{6.4}La_3(Zr_{1.6}Ta_{0.4})O_{12}$, $(Li_{6.4}Al_{0.2})La_3Zr_2O_{12}$, and $Li_{6.5}La_3(Zr_{1.5}Mo_{0.25})O_{12}$, a solid electrolyte

having a LISICON-type structure $Li_{3+x}(V_{1-x}Si_x)O_4$, a solid electrolyte having a perovskite-type structure $La_{2/3-x}Li_{3x}TiO_3$, and a solid electrolyte having an amorphous structure $Li_3BO_3$-$Li_4SiO_4$. Among them, it is particularly preferable to use a solid electrolyte having a garnet-type structure and a solid electrolyte having a LISICON-type structure from the viewpoint of reactivity during co-sintering with the LISICON-type solid electrolyte used in the present invention.

The solid electrolyte of the positive electrode layer may be obtained by the same method as in the case of the negative electrode active material except that a raw material compound containing a predetermined metal atom is used, or may be obtained as a commercially available product.

Usually, the average chemical composition and crystal structure of the solid electrolyte in the positive electrode layer are usually changed by element diffusion during sintering. The solid electrolyte preferably has the average chemical composition and the crystal structure described above in the solid-state battery after being sintered together with the negative electrode layer and the solid electrolyte layer.

The proportion by volume of the solid electrolyte in the positive electrode layer is not particularly limited, and is preferably 20% or more and 60% or less, and more preferably 30% or more and 45% or less, from the viewpoint of the balance between further improvement of the utilization factor of the positive electrode active material and high energy density of the solid-state battery.

As the sintering aid in the positive electrode layer, the same compound as the sintering aid in the negative electrode layer may be used.

The proportion by volume of the sintering aid in the positive electrode layer is not particularly limited, and is preferably 0.1% or more and 20% or less, and more preferably 1% or more and 10% or less, from the viewpoint of the balance between further improvement of the utilization factor of the negative electrode active material and high energy density of the solid-state battery.

The positive electrode layer may further contain a conductive agent other than the coated-type conductive agent. As the other conductive agent that may be contained in the positive electrode layer, any conductive agent known in the field of solid-state batteries may be used. Examples of such a conductive agent include metal materials such as silver (Ag), gold (Au), palladium (Pd), platinum (Pt), copper (Cu), tin (Sn), and nickel (Ni); and carbon materials such as carbon nanotubes, for example, acetylene black, Ketjen black, Super P (registered trademark), and VGCF (registered trademark).

The proportion by volume of the conductive agent in the positive electrode layer is not particularly limited, and is preferably 10% or more and 50% or less, and more preferably 20% or more and 40% or less from the viewpoint of the balance between further improvement of the utilization factor of the positive electrode active material and high energy density of the solid-state battery.

In the positive electrode layer, the porosity is not particularly limited, and is preferably 20% or less, more preferably 15% or less, and still more preferably 10% or less from the viewpoint of further improving the utilization factor of the negative electrode active material.

As the porosity of the positive electrode layer, a value measured by the same method as in the case of the porosity of the negative electrode layer is used.

The positive electrode layer 1 may have a main face current collecting structure, or may have an end face current collecting structure, as illustrated in FIGS. 1A and 1B. The positive electrode layer preferably has a main face current collecting structure from the viewpoint of reducing the production cost.

The positive electrode layer 1 having a main face current collecting structure means that the positive electrode layer 1 has a structure for collecting current on a main face of the positive electrode layer. Specifically, as illustrated in FIGS. 1A and 1B, the positive electrode layer 1 is in contact with the positive electrode current collecting layer 11 on a main face 1x of the positive electrode layer 1 and is electrically connected to the positive electrode terminal 10 through the positive electrode current collecting layer 11. In the main face current collecting structure of the positive electrode layer 1, the positive electrode current collecting layer 11 may be stacked on a main face of the positive electrode layer 1, and/or the positive electrode layer 1 may be stacked on a main face of the positive electrode current collecting layer 11. The main face is a face having a relatively large area, specifically, an upper face and/or a lower face perpendicular to the stacking direction. Colleting current on a main face means that electrons mainly enter and exit from the main face. In FIG. 1A, the positive electrode layer 1 is directly and electrically connected to the positive electrode terminal 10 on the positive electrode terminal 10 side but may be electrically connected to the positive electrode terminal 10 through a positive electrode current collector like the positive electrode layer having an end face current collecting structure described later. When the positive electrode layer 1 has a main face current collecting structure, the positive electrode layer 1 may be stacked on both main faces of the positive electrode current collecting layer 11 as illustrated in FIGS. 1A and 1B or may be stacked on one of the main faces.

The positive electrode layer 1 having an end face current collecting structure means that the positive electrode layer 1 has a structure for collecting current at an end face (in particular, only the end face) of the positive electrode layer 1 on the positive electrode terminal 10 side. Specifically, the positive electrode layer 1 may be electrically connected to the positive electrode terminal 10 through the positive electrode current collector while being in contact with the positive electrode current collector at an end face (in particular, only the end face) of the positive electrode layer 1 on the positive electrode terminal 10 side, or may be directly and electrically connected to the positive electrode terminal 10 at an end face (in particular, only the end face) of the positive electrode layer 1 on the positive electrode terminal 10 side.

The positive electrode current collecting layer 11 and the positive electrode current collector that may be included in the positive electrode layer 1 contain at least a conductive material. The positive electrode current collecting layer 11 and the positive electrode current collector may further contain a solid electrolyte. In a preferred aspect, the positive electrode current collecting layer 11 and the positive electrode current collector are composed of a sintered body containing at least a conductive material and a solid electrolyte. As the conductive material that may be contained in the positive electrode current collecting layer 11 and the positive electrode current collector, a material having a relatively high conductivity is usually used, and for example, the conductive material may be selected from the same conductive materials as those of the negative electrode current collecting layer and the negative electrode current collector. The solid electrolyte that may be contained in the positive electrode current collecting layer 11 and the positive electrode current collector may be selected from the same solid electrolyte as the solid electrolyte that may be contained in the negative electrode layer described above.

The positive electrode current collecting layer 11 and the positive electrode current collector preferably have a form of a sintered body from the viewpoint of reducing the production cost of the solid-state battery and reducing the internal resistance of the solid-state battery by integrally sintering them. When the positive electrode current collecting layer 11 and the positive electrode current collector have a form of a sintered body, for example, the positive electrode current collecting layer 11 and the positive electrode current collector may be composed of a sintered body further containing a sintering aid in addition to the conductive material and the solid electrolyte described above. The sintering agent contained in the positive electrode current collecting layer 11 and the negative electrode current collector may be selected from, for example, the same material as the sintering agent that may be contained in the negative electrode layer.

The thickness of the positive electrode current collecting layer is not particularly limited, and may be, for example, 1 um or more and 5 um or less, particularly 1 um or more and 3 um or less.

The thickness of the positive electrode current collector may be usually the same as the thickness of the positive electrode layer.

The positive electrode layer is a layer that may be referred to as a "positive electrode active material layer".

[Solid electrolyte layer]

In the present invention, the solid electrolyte layer 3 is not particularly limited, and is, for example, a material capable of conducting lithium ions or sodium ions (in particular, lithium ions). The solid electrolyte layer 3 may contain, as the solid electrolyte capable of conducting lithium ions, for example, one or more materials selected from a solid electrolyte having a LISICON-type structure (for example, a first solid electrolyte described later), a solid electrolyte having a garnet-type structure (for example, a second solid electrolyte described later), and an oxide glass ceramics-based lithium ion conductor. It is preferable that the solid electrolyte layer 3 contain either the first solid electrolyte or the second solid electrolyte described later or both of them from the viewpoint of further improving the utilization factor of the electrode active material. The solid electrolyte layer 3 preferably contains only the second solid electrolyte from the same viewpoint and other viewpoints (for example, from the viewpoint of production cost).

The first solid electrolyte is a solid electrolyte having a LISICON-type structure and containing at least V. In the solid electrolyte layer, the LISICON-type structure of the first solid electrolyte includes a $\beta_I$ structure, a $\beta_{II}$-type structure, a $\beta_{II}$'-type structure, a $T_I$-type structure, a $T_{II}$-type structure, a $\gamma_{II}$-type structure, and a $\gamma_0$-type structure. That is, the solid electrolyte layer may contain one or more kinds of solid electrolytes having a $\beta_I$ structure, a $\beta_{II}$-type structure, a $\beta_{II}$'-type structure, a $T_I$-type structure, a $T_{II}$-type structure, a $\gamma_{II}$-type structure, a $\gamma_0$-type structure, or a composite structure thereof. The LISICON-type structure of the first solid electrolyte is preferably a $\gamma_{II}$-type structure from the viewpoint of further improving the utilization factor of the electrode active material.

The first solid electrolyte having a $\gamma_{II}$-type structure in the solid electrolyte layer means that the solid electrolyte has a $\gamma_{II}$-type crystal structure, and in a broad sense, it means that the solid electrolyte has a crystal structure that may be recognized as a $\gamma_{II}$-type crystal structure by a person skilled in the field of solid-state batteries. In a narrow sense, the first solid electrolyte having a $\gamma_{II}$-type structure in the solid electrolyte layer means that the solid electrolyte shows one or more main peaks corresponding to Miller indices unique to a so-called $\gamma_{II}$-$Li_3VO_4$-type crystal structure at a predetermined incident angle in X-ray diffraction. A compound (that is, a solid electrolyte) having a $\gamma_{II}$-type structure is described, for example, in the document "J. solid state chem" (A. R. West et. al, J. solid state chem., 4, 20-28 (1972)), and examples thereof include ICDD Card No. 01-073-2850.

The first solid electrolyte having a $\beta_I$-type structure in the solid electrolyte layer means that the solid electrolyte has a $\beta_I$-type crystal structure, and in a broad sense, it means that the solid electrolyte has a crystal structure that may be recognized as a $\beta_I$-type crystal structure by a person skilled in the field of solid-state batteries. In a narrow sense, the first solid electrolyte having a $\beta_I$-type structure in the solid electrolyte layer means that the solid electrolyte shows one or more main peaks corresponding to Miller indices unique to a so-called $\beta_I$-$Li_3VO_4$-type crystal structure at a predetermined incident angle in X-ray diffraction. A compound (that is, the solid electrolyte) having a $\beta_I$-type structure is described, for example, in the document "J. solid state chem" (A. R. West et. al, J. solid state chem., 4, 20-28 (1972)), and as an example, XRD data (the d-value of the interplanar spacing and the Miller indices corresponding thereto) described in the following table is shown.

[Table 1]

| | $Li_2ZnSiO_4$ $\beta_I$, 25°C | |
|---|---|---|
| d(Å) | I | h k l |
| 5.4 | 80 | 1 1 0 |
| 4.08 | 60 | 1 2 0 |
| 3.88 | 60 | 1 0 1 |
| 3.65 | 100 | 1 1 1, 0 2 1 |
| 3.14 | 20 | 2 0 0, 1 2 1 |
| 3.10 | 40 | 1 3 0 |
| 2.71 | 80 | 2 2 0 |
| 2.68 | 60 | 0 4 0 |
| 2.47 | 80 | 0 0 2 |
| 2.38 | 60 | 2 2 1 |
| 2.36 | 20 | 0 4 1 |

The first solid electrolyte having a $\beta_{II}$-type structure in the solid electrolyte layer means that the solid electrolyte has a $\beta_{II}$-type crystal structure, and in a broad sense, it means that the solid electrolyte has a crystal structure that may be recognized as a $\beta_{II}$-type crystal structure by a person skilled in the field of solid-state batteries. In a narrow sense, the first solid electrolyte having a $\beta_{II}$-type structure in the solid electrolyte layer means that the solid electrolyte shows one or more main peaks corresponding to Miller indices unique to a so-called $\beta_{II}$-$Li_3VO_4$-type crystal structure at a predetermined incident angle in X-ray diffraction. A compound (that is, a solid electrolyte) having a $\beta_{II}$-type structure is described, for example, in the document "J. solid state chem" (A. R. West et. al, J. solid state chem., 4, 20-28 (1972)), and examples thereof include ICDD Card No. 00-024-0675.

The first solid electrolyte having a $\beta_{II}$'-type structure in the solid electrolyte layer means that the solid electrolyte has a $\beta_{II}$'-type crystal structure, and in a broad sense, it means that the solid electrolyte has a crystal structure that may be recognized as a $\beta_{II}$'-type crystal structure by a person skilled in the field of solid-state batteries. In a narrow sense, the first solid electrolyte having a $\beta_{II}$'-type structure in the solid electrolyte layer means that the solid electrolyte shows one or more main peaks corresponding to Miller indices unique to a so-called $\beta_{II}$'-$Li_3VO_4$-type crystal structure at a predetermined incident angle in X-ray diffraction. A compound (that is, the solid electrolyte) having a $\beta_{II}$'-type structure is described, for example, in the document "J. solid state chem" (A. R. West et. al, J. solid state chem., 4, 20-28 (1972)), and as an example, XRD data (the d-value of the interplanar spacing and the Miller indices corresponding thereto) described in the following table is shown.

[Table 2]

| | $Li_3CoGeO_4$ $\beta_{II'}$, 25°C | |
|---|---|---|
| d(Å) | I | h k l |
| | | 0 1 0 |
| 4.17 | 80 | 1 1 0 |
| 3.96 | 80 | 1 0 1 |
| 3.70 | 10 | 0 1 1 |
| 3.20 | 20 | 2 0 0, 1 1 1 |
| 2.75 | 100 | 2 1 0 |
| 2.74 | 60 | 0 2 0 |
| 2.50 | 80 | 0 0 2 |
| | | 1 2 0 |

The first solid electrolyte having a $T_I$-type structure in the solid electrolyte layer means that the solid electrolyte has a $T_I$-type crystal structure, and in a broad sense, it means that the solid electrolyte has a crystal structure that may be recognized as a $T_I$-type crystal structure by a person skilled in the field of solid-state batteries. In a narrow sense, the first solid electrolyte having a $T_I$-type structure in the solid electrolyte layer means that the solid electrolyte shows one or more main peaks corresponding to Miller indices unique to a so-called $T_I$-$Li_3VO_4$-type crystal structure at a predetermined incident angle in X-ray diffraction. A compound (that is, a solid electrolyte) having a $T_I$-type structure is described, for example, in the document "J. solid state chem" (A. R. West et. al, J. solid state chem., 4, 20-28 (1972)), and examples thereof include ICDD Card No. 00-024-0668.

The first solid electrolyte having a $T_{II}$-type structure in the solid electrolyte layer means that the solid electrolyte has a $T_{II}$-type crystal structure, and in a broad sense, it means that the solid electrolyte has a crystal structure that may be recognized as a $T_{II}$-type crystal structure by a person skilled in the field of solid-state batteries. In a narrow sense, the first solid electrolyte having a $T_{II}$-type structure in the solid electrolyte layer means that the solid electrolyte shows one or more main peaks corresponding to Miller indices unique to a so-called $T_{II}$-$Li_3VO_4$-type crystal structure at a predetermined incident angle in X-ray diffraction. A compound (that is, a solid electrolyte) having a $T_{II}$-type structure is described, for example, in the document "J. solid state chem" (A. R. West et. al, J. solid state chem., 4, 20-28 (1972)), and examples thereof include ICDD Card No. 00-024-0669.

The first solid electrolyte having a $\gamma_0$-type structure in the solid electrolyte layer means that the solid electrolyte has a $\gamma_0$-type crystal structure, and in a broad sense, it means that the solid electrolyte has a crystal structure that may be recognized as a $\gamma_0$-type crystal structure by a person skilled in the field of solid-state batteries. In a narrow sense, the first solid electrolyte having a $\gamma_0$-type structure in the solid electrolyte layer means that the solid electrolyte shows one or more main peaks corresponding to Miller indices unique to a so-called $\gamma_0$-$Li_3VO_4$-type crystal structure at a predetermined incident angle in X-ray diffraction. A compound (that is, the solid electrolyte) having a $\gamma_0$-type structure is described, for example, in the document "J. solid state chem" (A. R. West et. al, J. solid state chem., 4, 20-28 (1972)), and as an example, XRD data (the d-value of the interplanar spacing and the Miller indices corresponding thereto) described in the following table is shown.

[Table 3]

| | $Li_4CoSiO_4$ $\gamma_0$, 25°C | |
|---|---|---|
| d(Å) | I | hkl |
| 5.4 | 60 | 110, 020 |
| 4.08 | 80 | 120 |
| 3.92 | 60 | 101 |
| 3.69 | 20 | 111, 021 |
| 3.67 | 100 | |
| 3.16 | 20 | 121 |
| 3.10 | 60 | 200, 130, 210 |
| 2.90 | 20 | 031 |
| 2.71 | 100 | 220 |
| 2.68 | 60 | 040 |
| 2.65 | 20 | 131 |
| 2.64 | 20 | |
| 2.59 | 20 | 211 |
| 2.57 | 20 | |
| 2.51$_5$ | 100 | 002 |

In the solid electrolyte layer, the first solid electrolyte more preferably has an average chemical compound represented by the general formula (3).

[Chemical Formula 3] $(Li_{[3-ax+(5-b)(1-y)]}A_x)(V_yB_{1-y})O_4$ (3)

In the formula (3), A is one or more elements selected from the group consisting of sodium (Na), potassium (K), magnesium (Mg), calcium (Ca), and zinc (Zn),

B is one or more elements selected from the group consisting of zinc (Zn), aluminum (Al), gallium (Ga), silicon (Si), germanium (Ge), tin (Sn), phosphorus (P), arsenic (As), titanium (Ti), molybdenum (Mo), tungsten (W), iron (Fe), chromium (Cr), and cobalt (Co),
x has a relationship of $0 \leq x \leq 1.0$, particularly $0 \leq x \leq 0.2$, and is preferably 0,
y has a relationship of $0 < y < 1.0$, particularly $0.05 \leq y < 0.93$, and preferably has a relationship of $0.4 \leq y \leq 0.9$, more preferably $0.6 \leq y \leq 0.9$ from the viewpoint of further improving the utilization factor of the electrode active material,
a is the average valence of A, and is the same as the average valence of A in the formula (1), and
b is the average valence of B, and is the same as the average valence of B in the formula (1).

In the formula (3), from the viewpoint of further improving the utilization factor of the electrode active material, a preferred embodiment satisfies the following points:

A is Al;
B is one or more elements selected from the group consisting of Si, Ge, and P;
x has a relationship of $0 \leq x \leq 0.2$, particularly $0 \leq x \leq 0.1$, and is preferably 0; and

y has a relationship of $0.7 \leq y \leq 0.9$, and is preferably 0.8.

The average chemical composition of the first solid electrolyte in the solid electrolyte layer means an average value of the chemical composition of the first solid electrolyte in the thickness direction of the solid electrolyte layer. The average chemical composition of the first solid electrolyte may be analyzed and measured by breaking the solid-state battery and performing composition analysis by EDX using SEM-EDX (energy dispersive X-ray spectroscopy) in a field of view in which the whole negative electrode layer fits in the thickness direction.

In the solid electrolyte layer, the average chemical composition of the first solid electrolyte having the LISICON-type structure and the average chemical composition of the solid electrolyte having the garnet-type structure described later may be automatically distinguished and measured in the composition analysis because of these compositions. For example, from the SEM-EDX analysis, the part of the first solid electrolyte (that is, the solid electrolyte having the LISICON-type structure) may be separated through identification by detection of V, and the part of the second solid electrolyte (for example, a garnet-type solid electrolyte) may be separated through identification by La and Zr.

The first solid electrolyte of the solid electrolyte layer may be obtained by the same method as in the case of the negative electrode active material except that a raw material compound containing a predetermined metal atom is used, or may be obtained as a commercially available product.

The chemical composition and crystal structure of the first solid electrolyte in the solid electrolyte layer are usually changed by element diffusion during sintering. The first solid electrolyte preferably has the chemical composition and crystal structure described above in the solid-state battery after being sintered together with the negative electrode layer and the positive electrode layer. In particular, the chemical composition of the first solid electrolyte reflects the chemical composition of the solid electrolyte used at the time of production as it is, for example when high-speed sintering is performed at 750°C for about 1 minute together with the negative electrode layer, but when sintering is performed at 750°C for a long time of about 1 hour, element diffusion from the negative electrode active material of the negative electrode layer proceeds, and the V amount usually increases.

The proportion by volume of the first solid electrolyte in the solid electrolyte layer is not particularly limited, and is preferably 0% or more and 80% or less, more preferably 0% or more and 60% or less, and still more preferably 30% or more and 60% or less from the viewpoint of further improving the utilization factor of the electrode active material.

The proportion by volume of the first solid electrolyte in the solid electrolyte layer may be measured by the same method as in the case of the proportion by volume of the positive electrode active material.

The second solid electrolyte is a solid electrolyte having a garnet-type structure. The solid electrolyte layer containing the second solid electrolyte can improve the insulating properties of the solid electrolyte layer. This is considered to be because the second solid electrolyte is less likely to be reduced during charging and discharging, and electrons are less likely to be injected. When the first solid electrolyte and the second solid electrolyte are used in combination, the bending degree of the first solid electrolyte in the solid electrolyte layer increases, and the electronic resistance increases because of the second solid electrolyte.

The second solid electrolyte is the same as the solid electrolyte having a garnet-type structure that is preferably contained in the negative electrode layer and may be selected from the same range as the solid electrolyte having a garnet-type structure described in the description of the negative electrode layer. When both the solid electrolyte layer and the negative electrode layer contain a solid electrolyte having a garnet-type structure, the solid electrolyte having a garnet-type structure contained in the solid electrolyte layer and the solid electrolyte having a garnet-type structure contained in the negative electrode layer may have the same chemical composition or different chemical compositions from each other.

A preferred solid electrolyte as the solid electrolyte layer B is a solid electrolyte having the following chemical composition in the formula (2):

A is one or more (particularly two) elements selected from the group consisting of Ga and Al,
B is one or more elements selected from the group consisting of Nb, Ta, W, Mo, and Bi;
x has a relationship of $0 \leq x \leq 0.3$, and is preferably 0.2,
y has a relationship of $0 \leq y \leq 1.0$, preferably a relationship of $0 \leq y \leq 0.7$, more preferably a relationship of $0 \leq y \leq 0.3$, and still more preferably 0,
a is an average valence of A.
b is an average valence of B.

The average chemical composition of the second solid electrolyte in the solid electrolyte layer means an average value of the chemical composition of the second solid electrolyte in the thickness direction of the solid electrolyte layer. The average chemical composition of the second solid electrolyte may be analyzed and measured by breaking the solid-state battery and performing composition analysis by EDX using SEM-EDX (energy dispersive X-ray spectroscopy) in a field of view in which the whole negative electrode layer fits in the thickness direction.

The proportion by volume of the second solid electrolyte in the solid electrolyte layer is not particularly limited, and is preferably 20% or more and 100% or less, more preferably 40% or more and 100% or less, and still more preferably 40% or more and 70% or less, from the viewpoint of further improving the utilization factor of the electrode active material.

The proportion by volume of the second solid electrolyte in the solid electrolyte layer may be measured by the same method as in the case of the proportion by volume of the positive electrode active material.

As the oxide glass ceramic-based lithium ion conductor, for example, a phosphoric acid compound containing lithium, aluminum, and titanium as constituent elements (LATP), and a phosphoric acid compound containing lithium, aluminum, and germanium as constituent elements (LAGP) may be used.

Examples of the solid electrolyte capable of conducting sodium ions include a sodium-containing phosphoric acid compound having a NASICON structure, an oxide having a perovskite structure, and an oxide having a garnet-type or garnet-type similar structure. Examples of the sodium-containing phosphoric acid compound having a NASICON structure include $Na_xM_y(PO_4)_3$ ($1 \leq x \leq 2$, $1 \leq y \leq 2$, and M is at least one selected from the group consisting of Ti, Ge, Al, Ga, and Zr).

The solid electrolyte layer may further contain, for example, a sintering aid and the like in addition to the solid electrolyte. It is preferable that at least one of the negative electrode layer and the solid electrolyte layer, preferably both of the negative electrode layer and the solid electrolyte layer further contain a sintering aid from the viewpoint of further improving the utilization factor of the electrode active material. At least one of the negative electrode layer and the solid electrolyte layer further containing a sintering aid means that either the negative electrode layer or the solid electrolyte layer may further contain a sintering aid, or both of them may further contain a sintering aid.

As the sintering aid in the solid electrolyte layer, the same compound as the sintering aid in the negative electrode layer may be used.

The proportion by volume of the sintering aid in the solid electrolyte layer is not particularly limited, and is preferably 0.1% or more and 20% or less, and more preferably 1% or more and 10% or less, from the viewpoint of the balance between further improvement of the utilization factor of the electrode active material and high energy density of the solid-state battery.

The thickness of the solid electrolyte layer is usually 0.1 to 30 um, and is preferably 20 to 1 um from the viewpoint of reducing the thickness of the solid electrolyte layer.

As the thickness of the solid electrolyte layer, an average value of thicknesses measured at any 10 points in an SEM image is used.

In the solid electrolyte layer, the porosity is not particularly limited, and is preferably 20% or less, more preferably 15% or less, and still more preferably 10% or less from the viewpoint of further improving the utilization factor of the electrode active material.

As the porosity of the solid electrolyte layer, a value measured by the same method as in the case of the porosity of the negative electrode layer is used.

The chemical composition of the solid electrolyte layer is not necessarily homogeneous in the solid electrolyte layer, and for example, the chemical composition may change in the thickness direction. In particular, the average composition of the first solid electrolyte of the solid electrolyte layer satisfying the above condition can improve the insulation properties.

[Protective layer]

As illustrated on the paper face of FIG. 1A, the protective layer 5 is formed at least on the upper and lower faces of the solid-state battery and is preferably also formed on all side faces of the solid-state battery. The protective layer 5 is for electrically, physically, and chemically protecting the solid-state battery (in particular, battery elements such as the positive electrode layer, the negative electrode layer, and the solid electrolyte layer).

The protective layer 5 is usually formed of an insulating substance. The insulating substance means a substance having no ion conductivity or electron conductivity. Thus, the insulating substance is an inorganic substance having no ion conductivity or electron conductivity. The inorganic substance having no ion conductivity means an inorganic substance having an ion conductivity of $1 \times 10^{-7}$ S/cm or less. The ion conductivity is preferably $1 \times 10^{-10}$ S/cm or less from the viewpoint of inhibiting deterioration of the battery for a longer period. The inorganic substance having no electron conductivity means an inorganic substance having electron conductivity of $1 \times 10^{-7}$ S/cm or less. The electron conductivity is preferably $1 \times 10^{-10}$ S/cm or less from the viewpoint of inhibiting deterioration of the battery for a longer period.

When the protective layer 5 is formed of such an insulating substance, the protective layer 5 has excellent moisture resistance, environmental resistance, and durability. Specifically, the protective layer 5 may be a protective layer having higher bonding strength with the battery elements than a protective layer containing a resin (for example, a polymer compound). As a result, the protective layer 5 can more sufficiently prevent expansion and contraction of the solid-state battery, and as a result, can more sufficiently inhibit deterioration of battery performance than the protective layer containing a polymer compound.

The insulating substance constituting the protective layer 5 is not particularly limited, and examples thereof include glass and ceramics. Examples of the glass include quartz glass ($SiO_2$), and composite oxide-based glass obtained by combining $SiO_2$ and at least one selected from PbO, $B_2O_3$, MgO, ZnO, $Bi_2O_2$, $Na_2O$, and $Al_2O_3$. Examples of the ceramics include alumina, cordierite, mullite, steatite, and forsterite. The protective layer may be composed of one or more materials selected from the group consisting of these substances. The protective layer may contain a material having electron conductivity (for example, metal) as long as the battery elements do not have a short circuit. When the protective layer contains a material having electron conductivity, the proportion of the content of the electron conductive material may be, for example, 1 vol% or less. The protective layer containing an electron conductive material (for example, metal) can smoothly release heat generated by a battery reaction to the outside.

The protective layer is preferably composed of a sintered body containing the insulating substance particles described above. The sintered body constituting the protective layer has pores between the insulating substance particles and also has denseness to such an extent that adsorption, absorption, and permeation of moisture and gas (carbon dioxide) may be inhibited in the thickness direction (for example, the stacking direction L).

The protective layer may contain a resin such as a polymer compound, and for example, a polymer compound used at the time of production and/or a thermal decomposition product thereof may remain. The content of residues such as a polymer compound and a thermal decomposition product thereof in the protective layer is usually 0.1 wt% or less, and particularly 0.01 wt% or less with respect to the total amount of the protective layer. In the positive electrode layer, the positive electrode current collecting layer, the positive electrode current collector, the negative electrode layer, the negative electrode current collecting layer, the negative electrode current collector, the solid electrolyte layer, and the electrode separator described later, a residue may remain as in the protective layer. For example, the content of the residue in each layer or each part of the positive electrode layer, the positive electrode current collecting layer, the positive electrode current collector, the negative electrode layer, the negative electrode current collecting layer, the negative electrode current collector, the solid electrolyte layer, and the electrode separator may be within the same range as the content range of the residue in the protective layer as a value with respect to the total amount of each layer.

The porosity of the protective layer may be, for example, 0.1 vol% or more and 20 vol% or less, particularly 1 vol% or more and 10 vol% or less. As the porosity, a value measured by a gravimetric porosity method, a computed tomography method using CT scanning, an immersion method, or the like is used.

The oxygen permeability of the protective layer in the thickness direction may be, for example, $10^{-1}$cc/$m^2$/day/atmospheric pressure or less, particularly $10^{-3}$cc/$m^2$/day/atmospheric pressure or less.

The $H_2O$ permeability of the protective layer in the thickness direction may be, for example, $10^{-2}$g/$m^2$/day or less, particularly $10^{-4}$g/$m^2$/day or less. As the $H_2O$ permeability, a value measured at 25°C by a carrier gas method, a pressure deposition method, or a Ca corrosion method is used.

The protective layer may further contain, for example, a sintering aid and the like in addition to the insulating substance. The protective layer preferably further contains a sintering aid. As the sintering aid in the protective layer, the same compound as the sintering aid in the negative electrode layer may be used.

In the protective layer, the thickness of the thickest part is preferably 500 um or less, more preferably 100 um or less, still more preferably 50 um or less, and most preferably 20 um or less from the viewpoint of further inhibiting deterioration of battery performance. The protective layer has an average thickness of preferably 1 um or more, more preferably 5 um or more, from the viewpoint of further inhibiting deterioration in battery performance due to adsorption, absorption, permeation, and the like of moisture and gas (carbon dioxide).

As the thickness of the thickest part and the average thickness of the protective layer, the maximum thickness and the average thickness for the thickness at any 100 points are used, respectively.

The protective layer covers the upper and lower faces of the solid-state battery. The protective layer may be in direct contact with the upper and lower faces of the battery element covered with the protective layer as illustrated in FIGS. 1A and 1B, or may be in indirect contact with the upper and lower faces of the battery element with a layer other than the layer constituting the battery element interposed between the protective layer and the upper and lower faces. The protective layer being in direct contact with the upper and lower faces of the battery element means that the surface of the protective layer and the surface of the battery element are in direct contact with each other without interposing a layer other than the layer constituting the battery element between the protective layer and the battery element.

It is preferable that the protective layer and the upper and lower faces of the battery element covered with the protective layer be integrally sintered with each other as sintered bodies. The protective layer and the upper and lower faces of the battery element covered with the protective layer being integrally sintered with each other as sintered bodies means that the protective layer is joined to the upper and lower faces of the battery element covered with the protective layer by sintering. Specifically, the protective layer and the upper and lower faces of the battery element covered with the protective layer are sintered bodies and integrally sintered with each other. For example, it is preferable that the protective layer and the battery element be integrally sintered. It does not mean that all of the protective layer and the upper and lower faces of the battery element covered with the protective layer have to be integrated, and a part thereof does not have to be integrated. It is sufficient that the protective layer and the upper and lower faces of the battery element covered with the protective layer are integrated as a whole.

The upper and lower faces of the battery element covered with the protective layer are usually surfaces of the outermost layer of the battery element. The outermost layer of the battery element is the uppermost layer disposed at the uppermost position and the lowermost layer disposed at the lowermost position among the layers constituting the battery element. The surface of the outermost layer is the upper face of the uppermost layer and the lower face of the lowermost layer.

[Electrode separator]

The solid-state battery of the present invention usually further includes electrode separators (also referred to as "margin layers" or "margin parts") 15, 25.

The electrode separator 15 (that is, a positive electrode separator) is disposed around the positive electrode layer 1 to separate the positive electrode layer 1 from the negative electrode terminal 20. The electrode separator 25 (that is, a negative electrode separator) is disposed around the negative electrode layer 2 to separate the negative electrode layer 2 from the positive electrode terminal 10.

The electrode separators 15, 25 are preferably composed of one or more materials selected from the group consisting of, for example, a solid electrolyte, an insulating material, and a mixture thereof.

As the solid electrolyte that may constitute the electrode separators 15, 25, the same material as the solid electrolyte that may constitute the solid electrolyte layer may be used.

As the insulating substance that may constitute the electrode separators 15, 25, the same material as the insulating substance that may constitute the protective layer may be used.

The electrode separators preferably further contain a sintering aid. As the sintering aid in the electrode separators, the same compound as the sintering aid in the negative electrode layer may be used.

[Electrode terminal]

The solid-state battery of the present invention includes electrode terminals 10, 20 electrically connected to the positive electrode layer and the negative electrode layer on two opposing side faces, respectively. The electrode terminal electrically connected to the positive electrode layer is referred to as the positive electrode terminal, and the electrode terminal electrically connected to the negative electrode layer is referred to as the negative electrode terminal 20. The electrode terminal is a member also referred to as an end face electrode. The solid-state battery of the present invention includes the electrode terminals 10, 20 positioned parallel to each other and also parallel to the stacking direction L. Each electrode terminal preferably contains a conductive material having high conductivity. The specific material of the conductive material for constituting the electrode terminal is not particularly limited, but examples thereof include at least one conductive metal (that is, a metal or an alloy) selected from the group consisting of gold, silver, copper, platinum, tin, palladium, aluminum, titanium, nickel, oxygen-free copper, a Cu-Sn alloy, a Cu-Zr alloy, a Cu-Fe alloy, a Cu-Cr-Sn-Zn alloy, 42 alloy (Ni-Fe alloy), and a Kovar alloy from the viewpoint of conductivity.

The thicknesses of the electrode terminals 10, 20 are not particularly limited, and may be, for example, 1 um or more and 1 mm or less, and particularly 10 um or more and 100 um or less.

<Method for producing solid-state battery>

The solid-state battery may be produced, for example, by a so-called green sheet method, a printing method, or a method combining these methods.

The green sheet method will be described.

First, a solvent, a resin, and the like are appropriately mixed with a positive electrode active material to prepare a paste. The paste is applied onto a sheet and dried to form a green sheet for forming a positive electrode layer. The positive electrode layer green sheet may contain a solid electrolyte, a conductive agent, and/or a sintering aid. The conductive agent of the positive electrode layer may contain a coated-type conductive agent.

A solvent, a resin, and the like are appropriately mixed with a negative electrode active material to prepare a paste. The paste is applied onto a sheet and dried to form a green sheet for forming a negative electrode layer. The negative electrode layer green sheet may contain a solid electrolyte, a conductive agent, and/or a sintering aid. The conductive agent of the negative electrode layer may contain a coated-type conductive agent.

A solvent, a resin, and the like are appropriately mixed with a solid electrolyte to prepare a paste. The paste is applied and dried to prepare a green sheet for forming a solid electrolyte layer. The solid electrolyte layer green sheet may contain a sintering aid or the like.

A solvent, a resin, and the like are appropriately mixed with an insulating substance to prepare a paste. The paste is applied and dried to prepare a green sheet for forming a protective layer. The protective layer green sheet may contain a sintering aid or the like.

A solvent, a resin, and the like are appropriately mixed with a solid electrolyte and/or an insulating material to prepare a paste. The paste is applied and dried to prepare a green sheet for forming an electrode separator. The electrode separator green sheet may contain a sintering aid or the like.

A solvent, a resin, and the like are appropriately mixed with a conductive material to prepare an electrode terminal paste.

Next, the green sheets obtained by the above method are appropriately stacked to form a stacked body. The produced stacked body may be pressed. Examples of a preferable pressing method include an isostatic pressing method.

Thereafter, the electrode terminal paste is applied to a predetermined arrangement in the stacked body and sintered at, for example, 600 to 800°C, whereby a solid-state battery may be obtained.

The printing method will be described.

The printing method is the same as the green sheet method except for the following points.

- An ink for each layer having the same composition as the composition of the paste for each layer for obtaining a green sheet is prepared except that the blending amounts of the solvent and the resin are adjusted to those suitable for use as the ink.
- The ink for each layer is printed and stacked to produce a stacked body.

Hereinafter, the present invention will be described in more detail based on specific examples, but the present invention is not limited to the following examples at all and may be appropriately changed and implemented without changing the gist thereof.

EXAMPLES

[Production of Material]

In the following (1) to (3), a positive electrode active material and a negative electrode active material used for producing a positive electrode layer and a negative electrode layer and first and second solid electrolytes and a sintering aid used for producing a solid electrolyte, a sintering aid, and a solid electrolyte layer were produced to have compositions described later.

(1) Production of garnet-type solid electrolyte powder (solid electrolyte powder of negative electrode layer and solid electrolyte powder of solid electrolyte layer)

The garnet-type solid electrolyte powders used in Examples and Comparative Examples were produced as follows.

As raw materials, lithium hydroxide monohydrate $LiOH \cdot H_2O$, lanthanum hydroxide $La(OH)_3$, zirconium oxide $ZrO_2$, gallium oxide $Ga_2O_3$, aluminum oxide $Al_2O_3$, niobium oxide $Nb_2O_2$, tantalum oxide $Ta_2O_5$, and molybdenum oxide $MoO_3$ were used.

Each raw material was weighed to have a predetermined chemical composition, water was added thereto, the resulting mixture was sealed in a 100 ml polyethylene pot and rotated at 150 rpm for 16 hours on a pot rack to mix the raw materials. Lithium hydroxide monohydrate $LiOH \cdot H_2O$ as a Li source was charged in an excess of 3 wt% with respect to the target composition in consideration of Li deficiency during sintering.

The obtained slurry was evaporated and dried, and then calcined at 900°C for 5 hours to obtain a target phase.

A mixed solvent of toluene and acetone was added to the obtained calcined powder, and the obtained material was pulverized with a planetary ball mill for 6 hours.

The pulverized powder was dried to obtain a solid electrolyte powder. The powder was confirmed to have no compositional deviation through ICP measurement.

(2) Production of positive electrode active material powder, negative electrode active material powder, and LISICON-type solid electrolyte powder (first solid electrolyte powder of solid electrolyte layer)

The positive electrode active material powder, the negative electrode active material powder, and the first solid electrolyte powder used in Examples and Comparative Examples were produced as follows.

Lithium hydroxide monohydrate ($LiOH \cdot H_2O$), vanadium pentoxide ($V_2O_5$), and silicon (Si) were used as raw materials.

Each raw material was appropriately weighed to have a predetermined chemical composition, water was added thereto, the resulting mixture was sealed in a 100 ml polyethylene pot and rotated at 150 rpm for 16 hours on a pot rack to mix the raw materials.

The obtained slurry was evaporated and dried, and then calcined in air at 800°C for 5 hours.

An alcohol was added to the obtained calcined powder, and the obtained material was sealed again in a 100 ml polyethylene pot and rotated at 150 rpm for 16 hours on a pot rack to be pulverized.

The pulverized powder was sintered at 900°C for 5 hours.

Thereafter, a mixed solvent of toluene and acetone was added to the obtained sintered powder, the mixture was pulverized for 6 hours with a planetary ball mill, and dried to obtain a negative electrode active material powder and a first solid electrolyte powder. The powder was confirmed to have no compositional deviation through ICP measurement.

(3) Production of sintering aid powder

The sintering aid powder used in Examples and Comparative Examples was produced as follows.

Lithium hydroxide monohydrate ($LiOH{\cdot}H_2O$), boron oxide ($B_2O_3$), and aluminum oxide ($Al_2O_3$) were used as raw materials.

Each raw material was appropriately weighed to have a predetermined chemical composition, well mixed in a mortar, and then calcined at 650°C for 5 hours.

Thereafter, the calcined powder was pulverized again well in a mortar, mixed, and then sintered at 680°C for 40 hours.

A mixed solvent of toluene and acetone was added to the obtained sintered powder, the mixture was pulverized with a planetary ball mill for 6 hours, and dried to obtain a sintering aid powder. The powder was confirmed to have no compositional deviation through ICP measurement.

(4) Production of conductive agent

· Conductive agent A1 (uncoated Ag powder)

As the conductive agent A1, a spherical Ag powder (average primary particle size 0.8 um, manufactured by SHOEI CHEMICAL INC.) was used.

· Conductive agents B1 to B5 (Ag powder coated with particle layer)

As a method for supporting the coating material on the conductive agent, powder barrel sputtering was used. The conductive agent particles A1 as a core material were coated using a predetermined coating material ($Li_2ZrO_3$) as a target. By changing the sputtering time, conductive agent particles in which the particle size (thickness) and the coating amount of the coating material were changed were obtained. The ratio between the core material and the coating material and the sputtering time were adjusted so that the electrode layer obtained in each Example had a predetermined area ratio of coating material/Ag particles. A film-like coating material may be obtained by lowering the sputtering rate.

- Conductive agent C1 (Ag powder coated with particle layer)

A spherical Ag powder (average primary particle size: 2 um, manufactured by SHOEI CHEMICAL INC.) was subjected to a bead mill treatment to obtain a flat Ag powder having an aspect (a/b) ratio of 4.5 and b value of 0.9 um.

A Ag powder coated with a particle layer in which the surface of the flat Ag powder was coated with a particle $Li_2ZrO_3$ layer was obtained by the same method as in the case of the conductive agent B1 except that the flat Ag powder was used as the core material. The ratio between the core material and the coating material and the sputtering time were adjusted so that the electrode layer obtained in each Example had a predetermined area ratio of coating material/Ag particles.

· Conductive agent D1 (Ag powder coated with particle layer)

A Ag powder coated with a particle layer in which the surface of the spherical Ag powder was coated with a particle $Li_2SiO_3$ layer was obtained by the method as in the case of the conductive agent B1 except that $Li_2SiO_3$ was used as the coating material (target). The ratio between the core material and the coating material and the sputtering time were adjusted so that the electrode layer obtained in each Example had a predetermined coating material/Ag particle area ratio and a predetermined average thickness of the coating material.

· Conductive agent E1 (Ag powder coated with particle layer)

A Ag powder coated with a particle layer in which the surface of the spherical Ag powder was coated with a particle $Li_2TiO_3$ layer was obtained by the method as in the case of the conductive agent B1 except that $Li_2TiO_3$ was used as the coating material (target). The ratio between the core material and the coating material and the sputtering time were adjusted so that the electrode layer obtained in each Example had a predetermined coating material/Ag particle area ratio and a predetermined average thickness of the coating material.

· Conductive agent F1 (Ag powder coated with particle layer)

A Ag powder coated with a particle layer in which the surface of the spherical Ag powder was coated with a particle CuO layer was obtained in the same manner as in the case of the conductive agent B1 except that CuO was used as the coating material (target). The ratio between the core material and the coating material and the sputtering time were adjusted so that the electrode layer obtained in each Example had a predetermined coating material/Ag particle area ratio and a predetermined average thickness of the coating material.

· Conductive agent G1 (Cu powder coated with particle layer)

A Cu powder coated with a particle layer in which the surface of the spherical Cu powder was coated with a particle $Li_2ZrO_3$ layer was obtained in the same manner as in the case of the conductive agent B1 except that the spherical Cu powder was used as the core material. The ratio between the core material and the coating material and the sputtering time were adjusted such that the electrode layer obtained in each Example had a predetermined coating material/Cu particle area ratio and a predetermined average thickness of the coating material.

· Conductive agent H1 (Ag powder coated with particle layer)

A Ag powder coated with a particle layer in which the surface of the spherical Ag powder was coated with a particle ZrN layer was obtained in the same manner as in the case of the conductive agent B1 except that $Si_3N_4$ was used as the coating material (target). The ratio between the core material and the coating material and the sputtering time were adjusted so that the electrode layer obtained in each Example had a predetermined coating material/Ag particle area ratio and a predetermined average thickness of the coating material.

· Conductive agent J1 (Ag powder coated with particle layer)

A Ag powder coated with a particle layer in which the surface of the spherical Ag powder was coated with a particle WC layer was obtained in the same manner as in the case of the conductive agent B1 except that WC was used as the coating material (target). The ratio between the core material and the coating material and the sputtering time were adjusted so that the electrode layer obtained in each Example had a predetermined coating material/Ag particle area ratio and a predetermined average thickness of the coating material.

· Conductive agents K1 to K2 (Ag powder coated with film layer)

A film layer-coated Ag powder in which the surface of the spherical Ag powder was coated with a film $Li_2ZrO_3$ layer was obtained by the same method as in the case of the conductive agent B1 except that the spattering rate was reduced. The ratio between the core material and the coating material and the sputtering time were adjusted so that the electrode layer obtained in each Example had a predetermined coating material/Ag particle area ratio and a predetermined average thickness of the coating material.

· Conductive agent L1 (Ag powder coated with film layer)

A Ag powder coated with a film layer in which the surface of the spherical Ag powder was coated with a film Pd layer was obtained in the same manner as in the case of the conductive agent K1 except that Pd was used as the coating material (target). The ratio between the core material and the coating material and the sputtering time were adjusted so that the electrode layer obtained in each Example had a predetermined coating material/Ag particle area ratio and a predetermined average thickness of the coating material.

· Conductive agent M1 (Ag powder coated with film layer)

A Ag powder coated with a film layer in which the surface of the spherical Ag powder was coated with a film W layer was obtained in the same manner as in the case of the conductive agent K1 except that W was used as the coating material (target). The ratio between the core material and the coating material and the sputtering time were adjusted so that the electrode layer obtained in each Example had a predetermined coating material/Ag particle area ratio and a predetermined average thickness of the coating material.

[Example 1]

(Method for producing solid-state battery)

The solid-state battery (solid-state battery for single electrode evaluation) illustrated in FIG. 4A was produced by the following method.

· Negative electrode layer green sheet

$Li_3VO_4$ ($\beta_{II}$-$Li_3VO_4$ type) as a negative electrode active material, $Li_{6.5}La_3(Zr_{1.5}Ta_{0.5})O_{12}$ (garnet type) as a solid electrolyte powder, a conductive agent B2 (that is, a Ag powder coated with particle layer), and $Li_3BO_3$ as a sintering aid were weighed and kneaded with a butyral resin, an alcohol, and a binder to prepare a negative electrode layer slurry. The volume ratio of the negative electrode active material, the solid electrolyte, the conductive agent, and the sintering aid was (60 - x) : 35 : x : 5 ($10 \leq x \leq 25$). In Example 1, x was 20.

The negative electrode layer slurry was formed into a sheet on a PET film using a doctor blade method, and dried and peeled, whereby a negative electrode layer green sheet was obtained.

· Solid electrolyte layer green sheet

$Li_{3.2}(V_{0.8}Si_{0.2})O_4$ ($\gamma_{II}$ type) as a first solid electrolyte, $(Li_{6.4}Ga_{0.05}Al_{0.15})La_3Zr_2O_{12}$ (garnet type) as a second solid electrolyte, and $Li_3BO_3$ as a sintering aid were weighed and kneaded with a butyral resin, an alcohol, and a binder to prepare a solid electrolyte layer slurry. The volume ratio of the first solid electrolyte, the second solid electrolyte, and the sintering aid powder was 47.5 . 47.5 . 5.

The solid electrolyte layer slurry was formed into a sheet on a PET film using a doctor blade method, and dried and peeled, whereby a solid electrolyte layer sheet was obtained.

Next, the negative electrode layer green sheet and the solid electrolyte layer green sheet were stacked on each other and subjected to pressure bonding, whereby a stacked body was obtained.

The stacked body was cut into a square shape (shape in plan view) having a top view dimension of 10 mm × 10 mm. Thereafter, as illustrated in FIG. 4A, a Ag paste coating layer for the negative electrode current collecting layer 21 was formed on the surface of the negative electrode layer green sheet on the side opposite to the solid electrolyte layer green sheet. The obtained stacked body was sandwiched between two porous setters, the binder was removed at 400°C, and then sintering was performed at 750°C. The sintering was performed in an $N_2/H_2$ mixed atmosphere to inhibit the oxidation reaction of the coating material.

Thereafter, a Li metal 50 as a counter electrode and a reference electrode was attached to the surface of the solid electrolyte layer on the side opposite to the negative electrode layer, and warm isostatic pressing (WIP) treatment was performed under the conditions of 60°C and 200 MPa, whereby a solid-state battery was produced. Thereafter, the solid-state battery was sealed with a 2032 type coin cell and evaluated.

The thicknesses of the solid electrolyte layer 3, the negative electrode layer 2, and the negative electrode current collecting layer 21 were checked using a scanning electron microscope and they were 100 um, 15 um and 5 um, respectively. The porosities of the solid electrolyte layer and the negative electrode layer were 10% or less, and it was confirmed that sintering sufficiently proceeded.

Such a solid-state battery has a main face current collecting structure, and as illustrated in FIG. 4A, current is collected from the electrode layers in the directions of arrows. In the solid-state battery of FIG. 4A, the electron diffusion path in the negative electrode layer 2 was 15 um.

The dimensions (dimensions in X and Y directions) in top view after sintering were measured and they were 8 mm × 8 mm. The solid-state battery of this Example shrank along with the decrease of voids through the sintering process.

(Measurement and evaluation)

· Proportion by area of conductive agent (core material)

A SEM image (photograph) showing the stacked structure (sectional structure) of the solid-state battery was taken with image analysis software "Azo-kun" (manufactured by Asahi Kasei Engineering Corporation). The section of the solid-state battery for taking the SEM image is a section parallel to the stacking direction L of the positive electrode layer (counter electrode and reference electrode in the present Example), the solid electrolyte layer, the negative electrode layer, and the like and perpendicular to the positive electrode terminal and the negative electrode terminal and is also a section passing through the center of gravity of the solid-state battery in plan view. The center of gravity of the solid-state battery in a plan view is a point at which a homogeneous material (for example, paper) is cut along the contour of the solid-state battery (in plan view) and balanced and supported. The proportion by area of the conductive agent confirmed in the negative electrode layer in the SEM image was determined. The proportion by area is an average value of values measured at any 10 points and is a proportion of the area of the conductive agent (core material) to the total area of each visual field.

· Area ratio of coating material/core material (Ag particles or Cu particles)

Based on the areas of the coating material and the core material confirmed in the negative electrode layer of the TEM image taken by the method for measuring the proportion by area of the conductive agent, the proportions by area thereof were determined. Specifically, the proportion by area of the coating material/the core material was an average value of values measured at any 10 points and was determined as a proportion by area with respect to the core material (Ag particles or Cu particles) as a conductive agent in the negative electrode layer.

· Average thickness of coating material

The average value of the thicknesses of the coating material confirmed in the negative electrode layer in the TEM image taken by the method for measuring the proportion by area of the conductive agent was determined. Specifically, the thickness of the coating material was obtained as an average value of values measured at any 100 points.

· Utilization rate of negative electrode active material

The solid-state battery was subjected to a constant current charge/discharge test, and the electrical quantity was measured at a current density corresponding to 0.05 C in a voltage range of 0.2 V to 3.0 V (vs. Li/Li +) to calculate the reversible capacity.

The initial reversible capacity was calculated by dividing the initial reversible electric quantity obtained from the constant current charge/discharge test by the weight of the negative electrode active material. The capacity when vanadium (V) in the negative electrode active material caused a two-electron reaction was defined as a theoretical capacity, and the initial reversible capacity was divided by the theoretical capacity to calculate the utilization factor R.

⊙; $90\% \leq R \leq 100\%$ (best);
◦; $80\% \leq R < 90\%$ (good);
△; $70\% \leq R < 80\%$ (acceptable) (has no practical problem);
×; $R < 70\%$ (not acceptable) (has a practical problem).

[Examples 2 to 3]

A solid-state battery was produced, measured, and evaluated by the same method as in Example 1 except that the content of the coated conductive agent was changed.

[Comparative Examples 1 to 2]

A solid-state battery was produced, measured, and evaluated by the same method as in Example 1 except that a conductive agent A1 (uncoated conductive agent, spherical Ag powder, average primary particle size of 0.8 um, manufactured by SHOEI CHEMICAL INC.) was used instead of the coating conductive agent, and the content of the conductive agent A1 was changed.

[Table 4]

| | Before sintering | After sintering | | | | | |
|---|---|---|---|---|---|---|---|
| | Conductive agent used Type (Core material (Mp)/coating material (Mp)) | Proportion by area of conductive agent (core material) (%) (1) | Conductive agent (core material shape: average short side length (μm)) /coating material (coating layer form) | Area ratio of coating material/ core material (%) | Average thickness of coating material (nm) | Utilization factor of active material (%) | Evaluation |
| Comparative Example 1 | Conductive agent AI (Ag (spherical) (962)/-) | 25 | Ag (spherical: 3.5)/- | - | - | 62 | × |
| Comparative Example 2 | Conductive agent AI (Ag (spherical) (962)/-) | 20 | Ag (spherical: 3.1)/- | - | - | 33 | × |
| Example 1 | Conductive agent B2 (Ag (spherical) (962) /Li2ZrO3 (particulate) (1690)) | 25 | Ag (spherical: 1. 5) /Li2ZrO3 (particulate) | 1.2 | 15 | 95 | ⊙ |
| Example 2 | Conductive agent B2 (Ag (spherical) (962) /Li2ZrO3 (particulate) (1690)) | 20 | Ag (spherical: 1.2)/Li2ZrO3 (particulate) | 1.2 | 15 | 84 | ○ |
| Example 3 | Conductive agent B2 (Ag (spherical) (962) /Li2ZrO3 (particulate) (1690)) | 17 | Ag (spherical: *) /Li2ZrO3 (particulate) | 1.2 | 15 | 70 | △ |
| Mp: melting point (°C), (1) proportion by area with respect to negative electrode layer, *: not measured | | | | | | | |

Comparative Examples 1 to 2 relate to a solid-state battery produced by using an uncoated conductive agent and changing the content of the uncoated conductive agent.

From Comparative Examples 1 to 2, it was found that the utilization factor of the active material remarkably decreases as the uncoated conductive agent is contained and the content thereof is reduced. This is considered to be because the uncoated conductive agent is unified and formed into balls during firing, and thus the conductive path is interrupted, electrons are not supplied, and there is an active material that does not contribute to charging and discharging.

Examples 1 to 3 relate to a solid-state battery produced by using a conductive agent coated with a high-melting-point material and changing the content of the conductive agent.

From Examples 1 to 3, it was found that when the coated-type conductive agent coated with the high-melting-point material was contained as the conductive agent, the reversible capacity was able be maintained at a high level with a reduced amount of the content of the conductive agent. This is considered to be because the use of the coated conductive agent makes it possible to inhibit the unification and ball formation during sintering, and thus the conductive path in the negative electrode layer is easily connected with the same content of the conductive agent as compared with the uncoated conductive agent.

When the proportion by area of the conductive agent as a core material decreased, the reversible capacity decreased. From this, it was found that there is a preferred content range in which higher utilization factor can be achieved with the coated-type conductive agent contained.

In the solid-state battery obtained in Comparative Example 2, the average aspect ratio (a/b) of the core material (conductive agent) was 1.1, and the average short side length b was 3.1 um.

In the solid-state battery obtained in Example 2, the average aspect ratio (a/b) of the core material (conductive agent) was 1.8, and the average short side length b was 1.2 um.

Comparison between Comparative Example 2 and Example 2 shows that the use of the coated-type conductive agent increases the average aspect ratio of the core material and reduces the average short side length. This is considered to be because the use of the coated-type conductive agent inhibited unification and ball formation of the core particles during sintering. It is considered that, because of the inhibition of unification and ball formation of the core particles during sintering in this manner, the connectivity of the conductive agent in the electrode layer improved, the contact area with the active material improved, and thus the utilization factor improved.

[Examples 4 to 7]

A solid-state battery was produced, measured, and evaluated by the same method as in Example 1 except that the type and content of the coated-type conductive agent were changed.

[Table 5]

| | Before sintering | After sintering | | | | | |
|---|---|---|---|---|---|---|---|
| | Conductive agent used Type (Core material (Mp)/ coating material (Mp)) | Proportion by area of conductive agent (core material) (%) (1) | Conductive agent (core material shape: average short side length (μm))/coating material (coating layer form) | Area ratio of coating material/ core material (%) | Average thickness of coating material (nm) | Utilization factor of active material (%) | Evaluation |
| Example 4 | Conductive agent B1 (Ag (spherical) (962)/Li2ZrO3 (particulate) (1690)) | 25 | Ag (spherical: 2.3) /Li2ZrO3 (particulate) | 0.3 | 9 | 72 | △ |
| Example 1 | Conductive agent B2 (Ag (spherical) (962) /Li2ZrO3 (particulate) (1690)) | 25 | Ag (spherical: 1. 5) /Li2ZrO3 (particulate) | 1.2 | 15 | 95 | ⊙ |
| Example 5 | Conductive agent B3 (Ag (spherical) (962)/Li2ZrO3 (particulate) (1690)) | 25 | Ag (spherical: ∗) /Li2ZrO3 (particulate) | 2.8 | 28 | 94 | ⊙ |

(continued)

| | Before sintering | After sintering | | | | | |
|---|---|---|---|---|---|---|---|
| | Conductive agent used Type (Core material (Mp)/ coating material (Mp)) | Proportion by area of conductive agent (core material) (%) (1) | Conductive agent (core material shape: average short side length (μm))/coating material (coating layer form) | Area ratio of coating material/ core material (%) | Average thickness of coating material (nm) | Utilization factor of active material (%) | Evaluation |
| Example 6 | Conductive agent B4 (Ag (spherical) (962)/$Li2ZrO3$ (particulate) (1690)) | 25 | Ag (spherical: ∗) /$Li2ZrO3$ (particulate) | 5.2 | 39 | 87 | ○ |
| Example 7 | Conductive agent B5 (Ag (spherical) (962)/$Li2ZrO3$ (particulate) (1690)) | 25 | Ag (spherical: 1.1) /$Li2ZrO3$ (particulate) | 10.1 | 52 | 75 | △ |
| Mp: melting point (°C), (1) proportion by area with respect to negative electrode layer, ∗: not measured | | | | | | | |

Examples 4 to 7 relate to a solid-state battery produced by changing the coating amount of the high-melting-point material.

From Examples 4 to 7, it was found that when the area ratio (%) of the coating material/the core material (conductive agent) was 0.8% or more and 8% or less (particularly 0.8% or more and 4% or less), the utilization factor increased, which is more preferable.

This is considered to be due to the following phenomenon:

· When the content of the coated-type conductive agent is small, the effect of inhibiting the unification and ball formation during firing is weakened;

· When the content is too large, the charge transfer between the active material and the conductive agent is blocked although the effect of inhibiting the unification and ball formation is exhibited.

[Examples 8 to 10]

A solid-state battery was produced, measured, and evaluated by the same method as in Example 1 except that the type and content of the coated-type conductive agent were changed.

In the solid-state battery obtained in Example 10, the average aspect ratio (a/b) of the core material (conductive agent) was 4.3, and the average short side length b was 1.2 μm.

[Table 6]

| | Before sintering | After sintering | | | | | |
|---|---|---|---|---|---|---|---|
| | Conductive agent used Type (Core material (Mp)/ coating material (Mp)) | Proportion by area of conductive agent (core material) (%) (1) | Conductive agent (core material shape: average short side length (μm))/coating material (coating layer form) | Area ratio of coating material/ core material (%) | Average thickness of coating material (nm) | Utilization factor of active material (%) | Evaluation |
| Example 2 | Conductive agent B2 (Ag (spherical) (962) /Li2ZrO3 (particulate) (1690)) | 20 | Ag (spherical: 1.2) /Li2ZrO3 (particulate) | 1.2 | 15 | 84 | ○ |
| Example 8 | Conductive agent K1 (Ag (spherical) (962) /Li2ZrO3 (film) (1690)) | 20 | Ag (spherical: ∗) /Li2ZrO3 (film) | 3.5 | 15 | 88 | ○ |
| Example 9 | Conductive agent K2 (Ag (spherical) (962) /Li2ZrO3 (film) (1690)) | 20 | Ag (spherical: 0.9) /Li2ZrO3 (film) | 2.0 | 9 | 92 | ⊙ |
| Example 10 | Conductive agent C1 (Ag (flat) (962) /Li2ZrO3 (particulate) (1690)) | 20 | Ag (flat: 1.2) /Li2ZrO3 (particulate) | 1.2 | 15 | 95 | ⊙ |
| Mp: melting point (°C), (1) proportion by area with respect to negative electrode layer, ∗: not measured | | | | | | | |

Examples 2, 8 to 10 relate to a solid-state battery produced by changing the shape of the core material (conductive agent) and the form and average thickness of the coating material.

From Examples 8 and 9, it was found that a high effect can be obtained with the coating material having a film form. It was found that when the coating material has a film form, the thickness of the coating material is reduced, and thus the utilization factor of the active material improved, which is preferable.

From the comparison of Examples 2 and 10, it was found that the use of the conductive agent having a flat shape improves the utilization factor of the active material, which is preferable. This is considered to be because the conductive path is more easily formed in a flat shape than in a spherical shape.

[Examples 11 to 18]

A solid-state battery was produced, measured, and evaluated by the same method as in Example 1 except that the type and content of the coated-type conductive agent were changed.

In only Example 13, sintering was performed in the atmosphere.

[Example 19]

A solid-state battery was produced, measured, and evaluated by the same method as in Example 1 except that the negative electrode current collecting layer was not formed, and an end face current collecting structure was adopted in which the negative electrode layer was electrically connected to a negative electrode terminal through a negative electrode current collector while being in contact with the negative electrode current collector at an end face of the negative electrode layer.
The obtained solid-state battery had a sectional structure as illustrated in FIG. 4B.
Specifically, the solid-state battery of FIG. 4B was produced by the same method as the method for producing the solid-state battery of FIG. 4A except that a Ag paste coating layer for a negative electrode current collector 210 was formed on an end face of the negative electrode layer green sheet as illustrated in FIG. 4B.
Such a solid-state battery has an end face current collecting structure, and as illustrated in FIG. 4B, current is collected from the electrode layer in the direction of arrows. In the solid-state battery of FIG. 4B, the electron diffusion path in the negative electrode layer 2 was 15 um.
The dimensions (dimensions in X and Y directions) in top view after sintering were measured and they were 8 mm × 8 mm. The solid-state battery of this Example shrank along with the decrease of voids through the sintering process.

[Table 7]

| | Before sintering | After sintering | | | | | |
|---|---|---|---|---|---|---|---|
| | Conductive agent used Type (Core material (Mp) /coating material (Mp)) | Proportion by area of conductive agent (core material)(%) (1) | Conductive agent (core material shape: average short side length (μm))/coating material (coating layer form) | Area ratio of coating material/ core material (%) | Average thickness of coating material (nm) | Utilization factor of active material (%) | Evaluation |
| Example 11 | Conductive agent D1 (Ag (spherical) (962) /Li2SiO3 (particulate) (1205)) | 25 | Ag (spherical: ∗) /Li2SiO3 (particulate) | 1.2 | 18 | 83 | ○ |
| Example 1 | Conductive agent B2 (Ag (spherical) (962) /Li2ZrO3 (particulate) (1690)) | 25 | Ag (spherical: 1. 5) /Li2ZrO3 (particulate) | 1.2 | 15 | 95 | ⊙ |
| Example 12 | Conductive agent E1 (Ag (spherical) (962) /Li2TiO3 (particulate) (1530)) | 25 | Ag (spherical: 1.8)/Li2TiO3 (particulate) | 1.2 | 12 | 86 | ○ |
| Example 13 | Conductive agent FI (Ag (spherical) (962)/CuO (particulate) (1201)) | 25 | Ag (spherical: ∗) /CuO (particulate) | 1.2 | 11 | 92 | ⊙ |

(continued)

| | Before sintering | After sintering | | | | | |
|---|---|---|---|---|---|---|---|
| | Conductive agent used Type (Core material (Mp) /coating material (Mp)) | Proportion by area of conductive agent (core material) (%) (1) | Conductive agent (core material shape: average short side length (μm))/coating material (coating layer form) | Area ratio of coating material/ core material (%) | Average thickness of coating material (nm) | Utilization factor of active material (%) | Evaluation |
| Example 14 | Conductive agent L1 (Ag (spherical) (962) / Pd (film) (1555)) | 25 | Ag (spherical: ∗) /Pd (film) | 2.6 | 9 | 79 | △ |
| Example 15 | Conductive agent G1 (Cu (spherical) (1085) /Li2ZrO3 (particulate) (1690)) | 25 | Cu (spherical: 1. 2) /Li2ZrO3 (particulate) | 1.5 | 12 | 96 | ⊙ |
| Example 16 | Conductive agent M1 (Ag (spherical) (962)/W (film) (3422)) | 25 | Ag (spherical: 2.4)/W (film) | 2.5 | 11 | 78 | △ |
| Example 17 | Conductive agent H1 (Ag (spherical) (962) / Si3N 4 (particulate) (2980)) | 25 | Ag (spherical: 2.7)/Si3N4 (particulate) | 1.5 | 12 | 71 | △ |
| Example 18 | Conductive agent J1 (Ag (spherical) (962)/WC (particulate) (2870)) | 25 | Ag (spherical: ∗) /WC (particulate) | 2.4 | 12 | 75 | △ |
| Example 19(2) | Conductive agent B2 (Ag (spherical) (962) /Li2ZrO3 (particulate) (1690)) | 25 | Ag (spherical: 1.5)/Li2ZrO3 (particulate) | 1.2 | 15 | 90 | ⊙ |
| Mp: melting point (°C), (1) proportion by area with respect to negative electrode layer, (2) end face current collecting structure, ∗: not measured | | | | | | | |

Examples 11 to 18 relate to a solid-state battery produced by changing the compositions of the conductive agent (core material) and the coating material.

From Table 7, it was found that a high utilization factor can be obtained with varied compositions of the coating material.

From Examples 14 and 16 to 18, it was found that the effect can be obtained when a metal material, a metal nitride, or a metal carbide is used for the coating material, but a higher utilization factor can be obtained when an oxide is used for the coating material. This is considered to be because the use of an oxide as the coating material has a higher effect of improving the wettability between the active material and the conductive agent.

From the comparison of Examples 2 and 11 to 15, it was found that a particularly high effect can be obtained by using a coating material containing Zr, Cu, or Pb, which is an element hardly substituted with V contained in the active material.

From Example 15, it was found that a high utilization factor was obtained by using a coating material with Cu as the conductive agent as in the case of using Ag as the conductive agent.

[Example 20 and Comparative Example 3]

A solid-state battery was produced, measured, and evaluated by the same method as in Example 1 except that the type and content of the coated-type conductive agent were changed and $Li_{1.1}V_{0.9}O_2$ was used as the negative electrode active material.

[Table 8]

| | Before sintering | After sintering | | | | | | | |
|---|---|---|---|---|---|---|---|---|---|
| | Conductive agent used Type (Core material (Mp)/ coating material (Mp)) | Ratio Li/V of active material | Proportio n by area of conductiv e agent (core material) (%) (1) | Conductive agent (core material shape: average short side length (μm))/ coatin g material (coating layer form) | Area ratio of coating material/ core material (%) | Average thickness of coating material (nm) | Utilizati on factor of active material (%) | Evaluation | Increase rate (%) |
| Comparativ e Example 1 | Conductive agent Al (Ag (spherical) (962)/-) | 3 | 25 | Ag (spherical: 3.5)/- | - | - | 62 | × | - |
| Example 1 | Conductive agent B2 (Ag (spherical) (962)/Li2ZrO3 (particulate) (1690)) | 3 | 25 | Ag (spherical: 1.5)/Li2ZrO3 (particulate ) | 1.2 | 15 | 95 | ⊙ | 53 |
| Comparativ e Example 3 | Conductive agent Al (Ag (spherical) (962)/-) | 1.2 | 25 | Ag (spherical: 2.0)/- | - | - | 65 | × | - |
| Example 20 | Conductive agent B2 (Ag (spherical) (962)/Li2ZrO3 (particulate) (1690)) | 1.2 | 25 | Ag (spherical: 1.5) /Li2ZrO3 (particulate ) | 1.2 | 15 | 72 | △ | 11 |

Mp: melting point (°C), (1) proportion by area with respect to negative electrode layer, ∗: not measured

Example 20 and Comparative Example 3 relate to a solid-state battery in which the composition of the electrode active material is changed.

From Table 8, it was found that, an effect by coating with a high-melting-point material can be particularly obtained in the case of using an active material having a Li/V ratio of 3, as compared with the case of using an active material having a Li/V ratio of 1.2. This is considered to be because the active material having a Li/V ratio of 3 has particularly low wettability with the metal conductive agent, has a property that the unification and ball formation are likely to proceed, and the effect of inhibiting the ball formation by oxide coating is likely to be obtained.

## INDUSTRIAL APPLICABILITY

The solid-state battery according to an embodiment of the present invention can be used in various fields where battery use or power storage is assumed. Although it is merely an example, the solid-state battery according to an embodiment of the present invention can be used in the field of electronics mounting. The solid-state battery according to an embodiment of the present invention can also be used in the fields of electricity, information, and communication in which mobile devices and the like are used (for example, electric and electronic equipment fields or mobile equipment fields including mobile phones, smartphones, smartwatches, notebook computers, and small electronic machines such as digital cameras, activity meters, arm computers, electronic papers, wearable devices, RFID tags, card-type electronic money, and smartwatches), home and small industrial applications (for example, the fields of electric tools, golf carts, and home, nursing, and industrial robots), large industrial applications (for example, the fields of forklift, elevator, and harbor crane), transportation system fields (for example, the fields of hybrid vehicles, electric vehicles, buses, trains, power-assisted bicycles, electric two-wheeled vehicles, and the like), power system applications (for example, fields such as various types of power generation, road conditioners, smart grids, and household power storage systems), medical applications (medical device fields such as hearing aid buds), pharmaceutical applications (fields such as dosage management systems), IoT fields, space and deep sea applications (for example, fields such as space probes and submersibles), and the like.

## DESCRIPTION OF REFERENCE SYMBOLS

200: Coated-type conductive agent
201: Conductive agent (core material)
202: Coating material

## Claims

1. A solid-state battery comprising a positive electrode layer, a negative electrode layer, and a solid electrolyte layer interposed between the positive electrode layer and the negative electrode layer, wherein

    at least one electrode layer of the positive electrode layer and the negative electrode layer contains a conductive agent composed of a metal material, and
    in the electrode layer, the conductive agent is coated with a coating material having a melting point higher than that of the conductive agent.

2. The solid-state battery according to claim 1, wherein the coating material is a metal oxide.

3. The solid-state battery according to claim 1 or 2, wherein

    the electrode layer further includes an electrode active material and a solid electrolyte, and
    the coating material is different in quality of material from the electrode active material and the solid electrolyte.

4. The solid-state battery according to claim 3, wherein the coating material contains an element that does not form a solid solution in the electrode active material.

5. The solid-state battery according to any of claims 1 to 4, wherein

    the coating material forms a coating layer around the conductive agent, and

the coating layer has a particle form or a film form.

**6.** The solid-state battery according to any of claims 1 to 5, wherein

the coating material has a dimension of 500 nm or less while being disposed in contact with the conductive agent around the conductive agent, and
the dimension is a maximum length in a direction perpendicular to a surface of the conductive agent with which the coating material is in contact.

**7.** The solid-state battery according to any of claims 1 to 6, wherein the coating material has an area ratio of 0.1% or more and 15% or less with respect to the conductive agent.

**8.** The solid-state battery according to any of claims 1 to 7, wherein the conductive agent is composed of one or more metal materials selected from the group consisting of silver (Ag), gold (Au), palladium (Pd), platinum (Pt), copper (Cu), tin (Sn), nickel (Ni), and alloys thereof.

**9.** The solid-state battery according to any of claims 1 to 8, wherein the conductive agent is an elongated conductive agent, a spherical conductive agent, or a mixture thereof.

**10.** The solid-state battery according to any of claims 1 to 9, wherein the conductive agent has an average short side thickness of 0.1 um or more and 4.0 um or less.

**11.** The solid-state battery according to any of claims 1 to 10, wherein the conductive agent has a proportion by area of 5% or more and 35% or less with respect to the electrode layer.

**12.** The solid-state battery according to any of claims 1 to 11, wherein the electrode layer has an end face current collecting structure in which the electrode layer is in contact with an electrode current collector at an end face of the electrode layer and is electrically connected to an electrode terminal through the electrode current collector.

**13.** The solid-state battery according to claim 12, wherein the electrode current collector has an upper face flush with an upper face of the electrode layer and a lower face flush with a lower face of the electrode layer in a stacking direction of the positive electrode layer, the solid electrolyte layer, and the negative electrode layer.

**14.** The solid-state battery according to any of claims 1 to 13, wherein

the electrode layer is a negative electrode layer, and
the negative electrode layer contains a negative electrode active material having a molar ratio of Li to vanadium (V) of 2.0 or more.

**15.** The solid-state battery according to claim 14, wherein
the negative electrode active material has an average chemical composition represented by a general formula (1):

[Chemical Formula 1] $(Li_{[3-ax+(\beta-b)\{1-y)]}A_x)\ (V_yB_{1-y})\ O_4$ (1)

wherein A is one or more elements selected from the group consisting of Na, K, Mg, Ca, and Zn; B is one or more elements selected from the group consisting of Zn, Al, Ga, Si, Ge, Sn, P, As, Ti, Mo, W, Fe, Cr, and Co; $0 \leq x \leq 1.0$ and $0.5 \leq y \leq 1.0$ are satisfied; a is an average valence of A; and b is an average valence of B.

**16.** The solid-state battery according to claim 14 or 15, wherein the negative electrode active material has a $\beta_{II}$-$Li_3VO_4$-type crystal structure or a $\gamma_{II}$-$Li_3VO_4$-type crystal structure.

**17.** The solid-state battery according to any of claims 14 to 16, wherein the negative electrode layer has a thickness of 2 um or more and 50 um or less.

**18.** The solid-state battery according to any of claims 14 to 17, wherein

at least one of the negative electrode layer and the solid electrolyte layer further contains a sintering aid, and
the sintering aid is a compound containing Li, B, and O and having a chemical composition having a molar ratio of Li to B (LifB) of 2.0 or more.

**19.** The solid-state battery according to any of claims 1 to 18, wherein the positive electrode layer and the negative electrode layer are layers capable of occluding and releasing lithium ions.

**20.** The solid-state battery according to any of claims 1 to 19, wherein the solid electrolyte layer and the positive electrode layer, and the solid electrolyte layer and the negative electrode layer are integrally sintered with each other as sintered bodies.

FIG. 1A

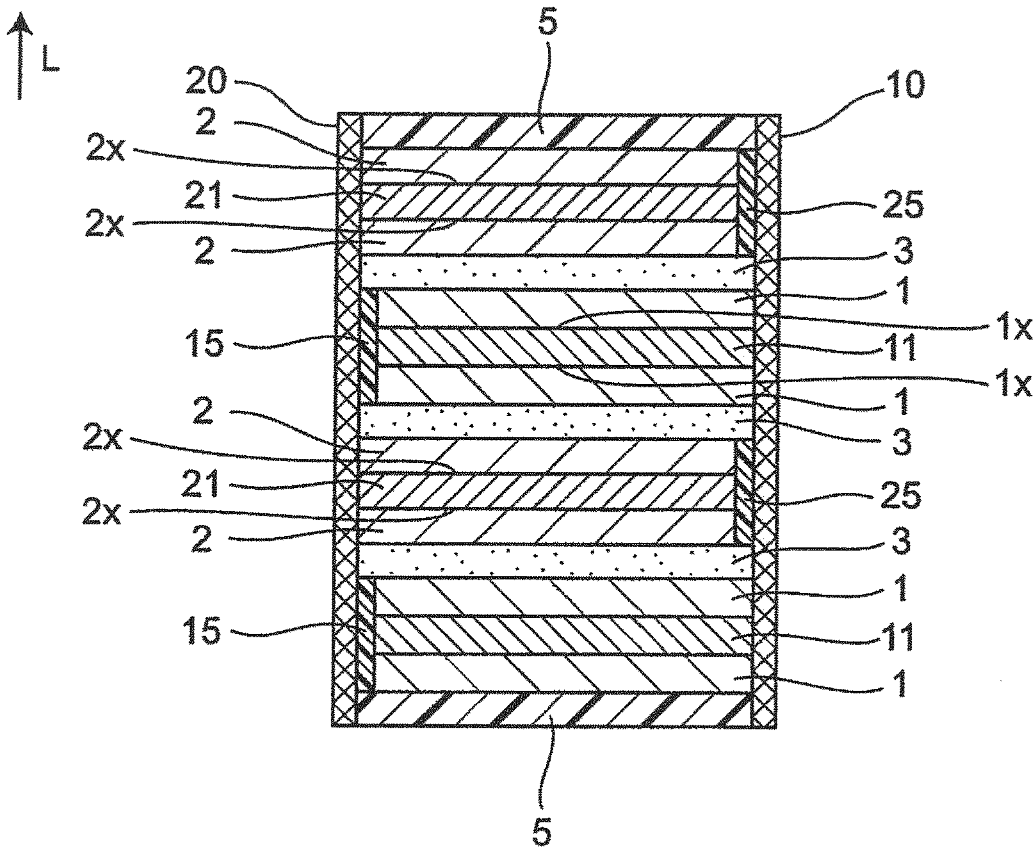

FIG. 1B

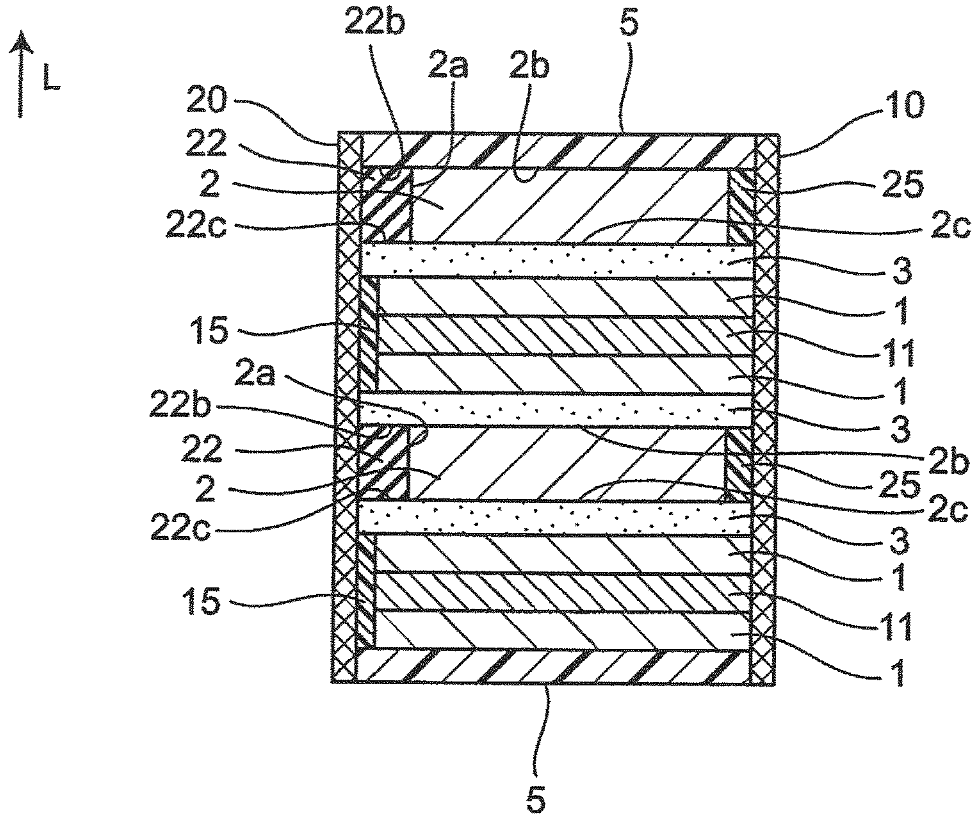
22b
5
2a
2b
L
20
10
22
25
2
22c
2c
3
1
15
11
1
2a
22b
3
22
2b
2
25
22c
2c
3
1
15
11
1
5

FIG. 2A

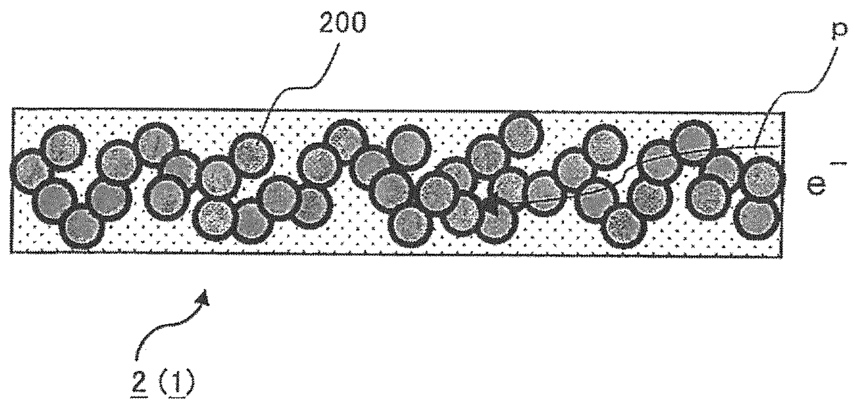
200
p
e⁻
2 (1)

FIG. 2B

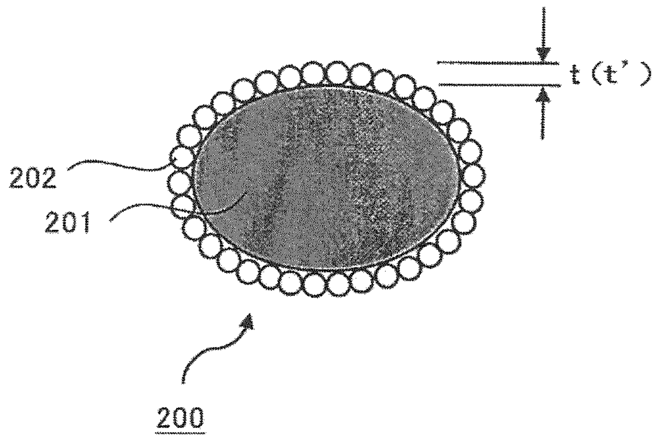


FIG. 2C

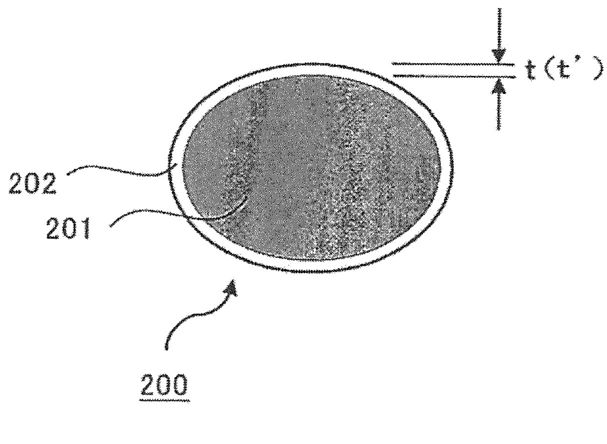

FIG. 2D

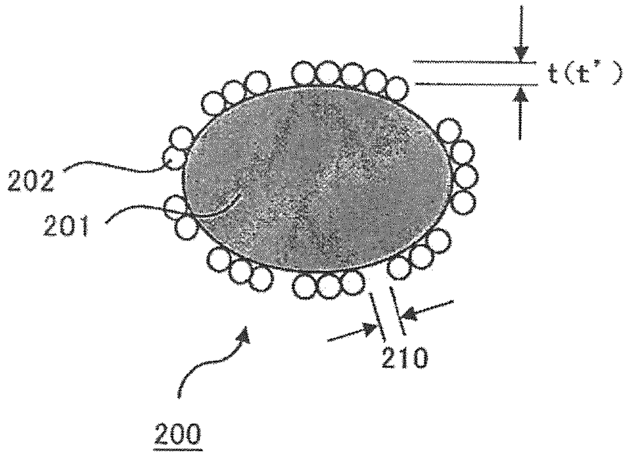


FIG. 2E

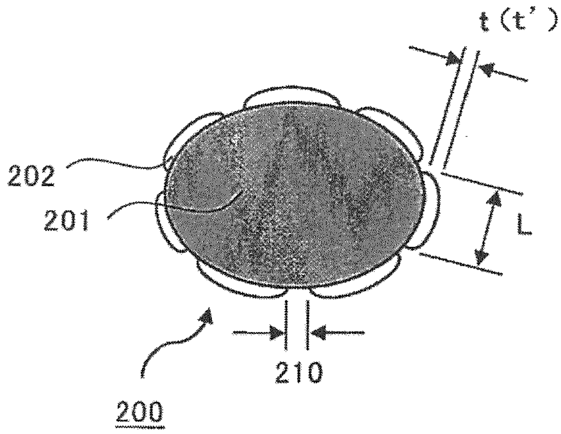

FIG. 3A

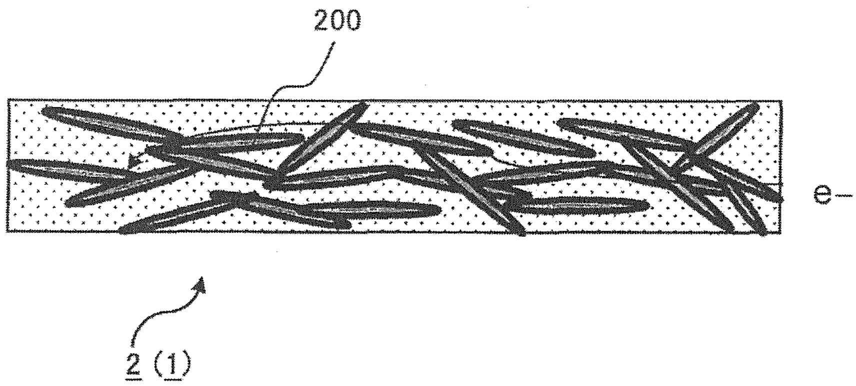


FIG. 3B

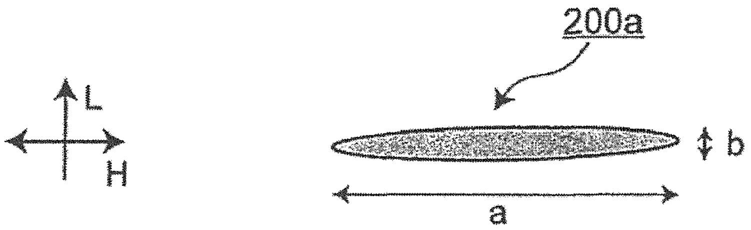


FIG. 3C

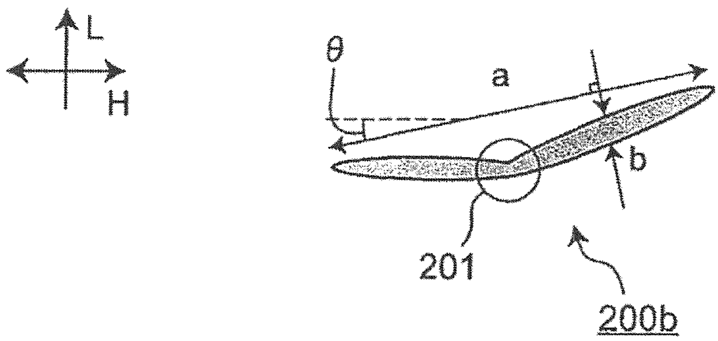

FIG. 4A

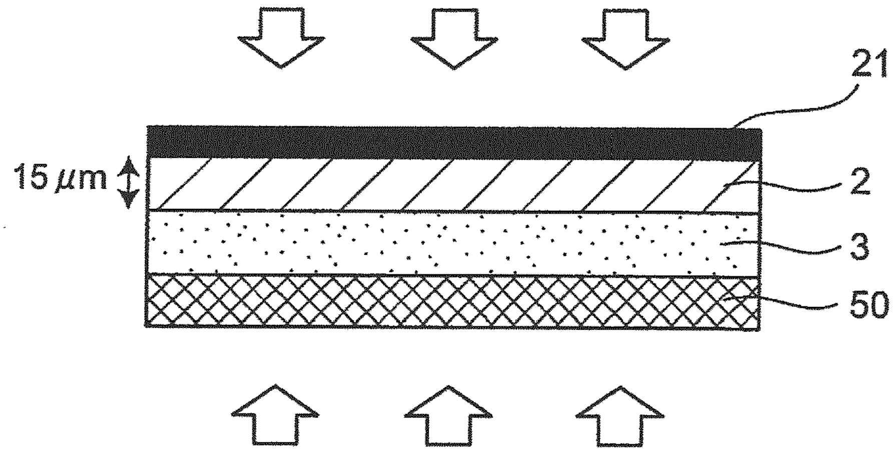


FIG. 4B

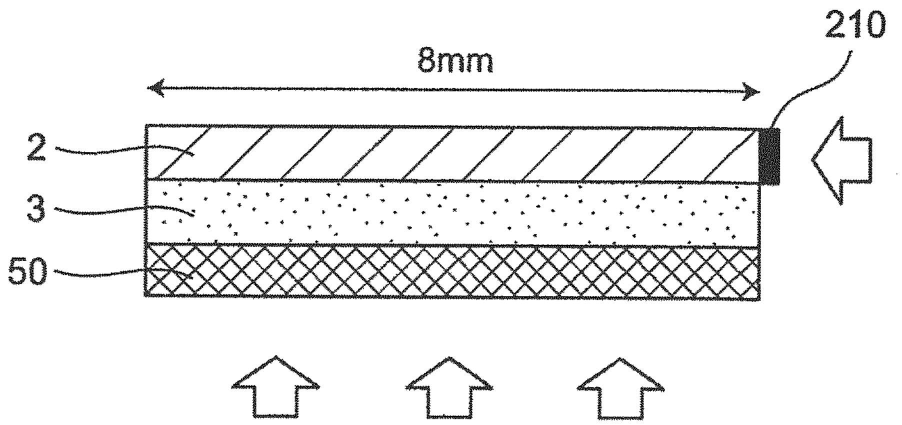

FIG. 5A

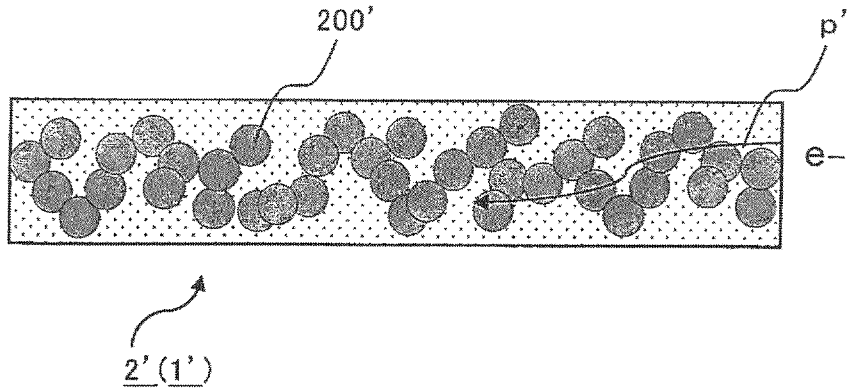


FIG. 5B

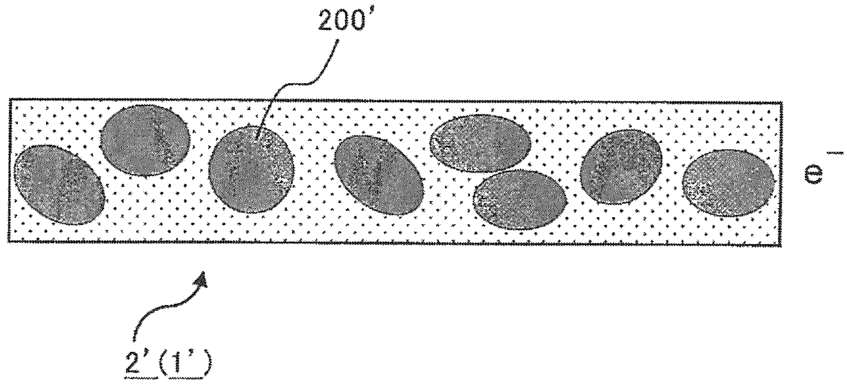

**INTERNATIONAL SEARCH REPORT**

International application No. PCT/JP2021/019326

A. CLASSIFICATION OF SUBJECT MATTER

H01M 4/62(2006.01)i; H01B 1/06(2006.01)i; H01M 4/485(2010.01)i; H01M 10/0525(2010.01)i; H01M 10/0562(2010.01)i; H01M 10/0585(2010.01)i

FI: H01M4/62 Z; H01M10/0562; H01M10/0585; H01M10/0525; H01M4/485; H01B1/06 A

According to International Patent Classification (IPC) or to both national classification and IPC

B. FIELDS SEARCHED

Minimum documentation searched (classification system followed by classification symbols)

H01M4/62; H01B1/06; H01M4/485; H01M10/0525; H01M10/0562; H01M10/0585

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | WO 2013/121642 A1 (SONY CORP.) 22 August 2013 (2013-08-22) | 1-20 |
| A | WO 2019/044902 A1 (MURATA MANUFACTURING CO., LTD.) 07 March 2019 (2019-03-07) | 1-20 |
| A | WO 2019/093403 A1 (MURATA MANUFACTURING CO., LTD.) 16 May 2019 (2019-05-16) | 1-20 |
| P, A | JP 2020-95934 A (PANASONIC IP MANAGEMENT CO., LTD.) 18 June 2020 (2020-06-18) | 1-20 |

☐ Further documents are listed in the continuation of Box C.

☒ See patent family annex.

* Special categories of cited documents:

"A" document defining the general state of the art which is not considered to be of particular relevance

"E" earlier application or patent but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| 05 July 2021 (05.07.2021) | 20 July 2021 (20.07.2021) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**
Information on patent family members

International application No.
PCT/JP2021/019326

| Patent Documents referred in the Report | Publication Date | Patent Family | Publication Date |
|---|---|---|---|
| WO 2013/121642 A1 | 22 Aug. 2013 | US 2014/0377627 A1<br>CN 104106164 A | |
| WO 2019/044902 A1 | 07 Mar. 2019 | US 2020/0106130 A1<br>US 2020/0106131 A1<br>WO 2019/044901 A1<br>CN 111033858 A<br>CN 111033859 A | |
| WO 2019/093403 A1 | 16 May 2019 | US 2020/0259213 A1<br>CN 111213276 A | |
| JP 2020-95934 A | 18 Jun. 2020 | US 2020/0168945 A1<br>CN 111244533 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 5644951 B
- WO 2019044901 A
- WO 2019044902 A


### Non-patent literature cited in the description


- **A. R. WEST.** J. solid state chem. *J. solid state chem.,* 1972, vol. 4, 20-28